(19) Europäisches Patentamt
European Patent Office
Office européen des brevets

(11) **EP 4 611 208 A1**

(12) **EUROPEAN PATENT APPLICATION**
published in accordance with Art. 153(4) EPC

(43) Date of publication:
**03.09.2025 Bulletin 2025/36**

(21) Application number: 23893157.0

(22) Date of filing: **29.06.2023**

(51) International Patent Classification (IPC):
*H02J 3/38* (2006.01)    *H02J 3/01* (2006.01)
*H02M 3/158* (2006.01)   *H02M 1/44* (2007.01)
*H02M 1/12* (2006.01)

(52) Cooperative Patent Classification (CPC):
**H02J 3/01; H02J 3/38; H02M 1/12; H02M 1/44;
H02M 3/158**

(86) International application number:
**PCT/CN2023/104126**

(87) International publication number:
**WO 2024/109057 (30.05.2024 Gazette 2024/22)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **23.11.2022 CN 202211476312**

(71) Applicant: **Huawei Technologies Co., Ltd.
Shenzhen, Guangdong 518129 (CN)**

(72) Inventors:
• **ZENG, Yingyu**
  **Shenzhen, Guangdong 518129 (CN)**
• **ZHANG, Xiaowei**
  **Shenzhen, Guangdong 518129 (CN)**
• **REN, Huasheng**
  **Shenzhen, Guangdong 518129 (CN)**

(74) Representative: **Gill Jennings & Every LLP
The Broadgate Tower
20 Primrose Street
London EC2A 2ES (GB)**

(54) **FILTER CIRCUIT, CONVERTER AND POWER SUPPLY SYSTEM**

(57) This application provides a filter circuit, a converter, and a power supply system. The filter circuit includes a first filter module, a second filter module, and a first capacitor. The first filter module includes a second capacitor and a third capacitor that are connected in series. A first end of the first capacitor is connected between the second capacitor and the third capacitor. A second end of the first capacitor is connected to the second filter module. The first filter module includes a first inductor, and/or the second filter module includes a second inductor. One end of the first inductor is connected to the second capacitor. The first inductor is configured to perform common mode suppression on a signal that passes through the first filter module. The second inductor is configured to perform common mode suppression on a signal that passes through the second filter module. This application can enable the filter circuit to have good filtering effect, and reduce a volume and costs of the filter circuit, thereby reducing a volume and costs of the converter.

FIG. 9b

EP 4 611 208 A1

## Description

This application claims priority to Chinese Patent Application No. 202211476312.0, filed with the China National Intellectual Property Administration on November 23, 2022 and entitled "FILTER CIRCUIT, CONVERTER, AND POWER SUPPLY SYSTEM", which is incorporated herein by reference in its entirety.

## TECHNICAL FIELD

This application relates to the field of power generation technologies, and in particular, to a filter circuit, a converter, and a power supply system.

## BACKGROUND

In the field of new energy-based power generation, a power supply system usually includes a direct current power supply, a converter, and an inverter. The direct current power supply such as a solar photovoltaic panel, an energy storage battery, or a fuel cell outputs direct current electric energy at a fixed voltage, and transfers the direct current at the fixed voltage to a converter. The converter converts the direct current electric energy into direct current electric energy at different voltages or a same voltage, and transfers the direct current electric energy to an inverter. The inverter converts the direct current electric energy into alternating current electric energy, and transfers the alternating current electric energy to a power grid. The converter needs to comply with an EMC (Electromagnetic Compatibility, electromagnetic compatibility) standard during use. Therefore, in addition to a conversion circuit, the converter may further include a filter circuit, to perform filtering processing on an electromagnetic interference signal that passes through the converter.

In a related technology, the filter circuit includes a plurality of capacitors and an inductor. Ends of some capacitors in the plurality of capacitors are connected to the conversion circuit, and the other ends are grounded. The inductor is connected between at least one capacitor and the conversion circuit.

In the related technology, the other ends of all the plurality of capacitors are grounded. Therefore, the capacitors need to meet a mandatory standard requirement of electrical safety. A capacitance value of the capacitor cannot be excessively large, and a capacitor level is high. Consequently, filtering effect of the capacitor is poor, and costs of the capacitor are high. However, to achieve good filtering effect of the filter circuit, inductance of the inductor needs to be increased, which causes a large volume of the filter circuit, and consequently causes high costs of the converter.

## SUMMARY

To resolve the foregoing technical problem, this application provides a filter circuit, a converter, and a power supply system, so that the filter circuit has good filtering effect, and a volume and costs of the filter circuit are reduced, thereby reducing a volume and costs of the converter.

This application provides a filter circuit, including a first filter module, a second filter module, and a first capacitor. The first filter module includes a second capacitor and a third capacitor that are connected in series. A first end of the first capacitor is connected between the second capacitor and the third capacitor. A second end of the first capacitor is connected to the second filter module. In some possible implementations, the first filter module includes a first inductor. In some other possible implementations, the second filter module includes a second inductor. In some other possible implementations, the first filter module includes a first inductor, and the second filter module includes a second inductor. One end of the first inductor is connected to the second capacitor. The first inductor is configured to perform common mode suppression on a signal that passes through the first filter module. The second inductor is configured to perform common mode suppression on a signal that passes through the second filter module.

When the filter circuit in this application is used in a converter, the filter circuit may be electrically connected to a conversion circuit. The first filter module, the second filter module, and the first capacitor are separately connected to the conversion circuit. The conversion circuit may include a first input, a second input, a first output, and a second output. The first input and the first output share a power supply rail. The first input and the second input are located on different power supply rails. The first output and the second output are located on different power supply rails. There is no low direct current impedance electrical connection between the first input and the first output in the conversion circuit. Two ends of a series circuit that includes the second capacitor and the third capacitor may be used as input ends of the converter. Two ends of the second inductor in the second filter module may be respectively connected to the first output and the second output of the conversion circuit. Power may enter the conversion circuit through the first filter module in the filter circuit, and be output by the second filter module. The first end of the first capacitor is connected to voltage division points of the second capacitor and the third capacitor in the first filter module. The second end of the first capacitor is connected to an output end of the second filter module.

The converter may generate electromagnetic interference during use, and may also be subject to electromagnetic interference from another device. The electromagnetic interference usually includes common mode electromagnetic interference and differential mode electromagnetic interference. However, the second capacitor and the third capacitor in the first filter module may perform differential mode filtering on the signal that passes through the first filter capacitor, that is, filter a differential mode electromagnetic interference signal that passes through the first filter module. The first inductor may perform common mode filtering on the signal that passes through the first filter module, that is, filter a common mode electromagnetic interference signal that passes through the first filter module. The second inductor may perform common mode filtering on the signal that passes through the second filter module, that is, filter a common mode electromagnetic interference signal that passes through the second filter module. Therefore, the filter circuit may filter a differential mode electromagnetic interference signal and a common mode electromagnetic interference signal that pass through the filter circuit, thereby implementing filtering effect of the filter circuit.

In this application, an EMI (Electromagnetic Interference, electromagnetic interference) voltage division point is formed between the second capacitor and the third capacitor. An EMI voltage at the voltage division point can be close to a low potential 0 by using a proper ratio of a capacitance value of the second capacitor to a capacitance value of the third capacitor. The first capacitor CY3 has low alternating current impedance. The first end of the first capacitor is connected to the voltage division point between the second capacitor and the third capacitor, and the second end of the first capacitor is connected to a measurement end, to pull an EMI voltage of the measurement end to be close to the potential 0 at the voltage division point N, thereby implementing the filtering effect of the filter circuit.

In this application, the first end of the first capacitor is connected between the second capacitor and the third capacitor, and the second end of the first capacitor is connected to the second filter module. Therefore, two ends of the first capacitor both are not grounded, and the first capacitor may be a capacitor with a low electrical safety level, thereby reducing costs of the first capacitor. In addition, the first capacitor does not need to be connected to a chassis, and does not need to be limited by a contact current limit that can be perceived by a human body. Therefore, a nominal capacitance value of the first capacitor may be a large value, thereby improving the filtering effect of the filter circuit.

In addition, because a capacitance value of the first capacitor is negatively correlated with a resonance frequency of the filter circuit, when the nominal capacitance value of the first capacitor increases, the resonance frequency of the filter circuit decreases. In this way, the resonance frequency may be farther away from a working frequency of the converter, and occurrence of resonance can also be reduced.

In some possible implementations, the first filter module further includes a first resistor and a second resistor that are connected in series, the first resistor is connected in parallel to the second capacitor, and the second resistor is connected in parallel to the third capacitor. Because the second capacitor is connected in parallel to the first resistor, voltages at two ends of the second capacitor are the same as voltages at two ends of the first resistor. Similarly, voltages at two ends of the third capacitor are the same as voltages at two ends of the second resistor. The first resistor and the second resistor are connected in series, and are connected between a first input end and a first output end of the first filter module. Therefore, the first resistor and the second resistor may divide a direct current voltage between the first input end and the first output end. When the direct current voltage between the first input end and the second input end changes, direct current voltages of the second capacitor and the third capacitor change at the same time, and actual capacitance values of the second capacitor and the third capacitor also change at the same time. In this way, a ratio of the actual capacitance value of the second capacitor to the actual capacitance value of the third capacitor may remain unchanged under the direct current voltages. In this way, a common mode suppression ratio of the filter circuit does not change as a working condition changes, and the common mode suppression ratio is within a range of good common mode suppression performance, and an EMC limit is not exceeded. Therefore, when a direct current voltage difference range between an input end and an output end is wide, the common mode suppression ratio can also be kept at a high level. In other words, when the filter circuit in this application is used in a converter with a wide direct current voltage difference range between an input end and an output end, good filtering effect can also be mentioned.

In some possible implementations, a resistance value of the first resistor is the same as a resistance value of the second resistor. Because direct current voltages, obtained through division, of the second capacitor and the third capacitor mainly depend on the resistance values of the first resistor and the second resistor, when the resistance values of the first resistor and the second resistor are the same, the direct current voltages, obtained through division, of the second capacitor and the third capacitor can always be the same.

In some possible implementations, a second end of the second capacitor is connected to a first end of the third capacitor. The first filter module further includes a fourth capacitor. A first end of the fourth capacitor is connected to a first end of the second capacitor, and a second end of the fourth capacitor is connected to a second end of the third capacitor. Because an equivalent nominal capacitance value of a circuit that includes two capacitors connected in parallel is a sum of nominal capacitance values of the two capacitors, the fourth capacitor is connected in parallel to the series circuit that includes the second capacitor and the third capacitor, so that the equivalent nominal capacitance value of the entire circuit can be increased, and differential mode filtering effect can be further improved.

In some possible implementations, both the second capacitor and the third capacitor include a plurality of capacitors that are connected in series, in parallel, or in series and in parallel. That a plurality of capacitors are connected in series and in parallel means that the plurality of capacitors are connected in a combination of a series connection and a parallel connection. A relative tolerance of a total capacitance value obtained after a plurality of capacitors are combined is less than a relative tolerance of a capacitance value of one capacitor. Therefore, tolerances of alternating current voltages, obtained through division, of the second capacitor and the third capacitor can be reduced, and consistency of filtering effect of a product can be improved.

In some possible implementations, the first filter module further includes a third resistor, a fifth capacitor, and a sixth capacitor. The third resistor is connected in parallel to the sixth capacitor. A second end of the fifth capacitor is connected to a first end of the sixth capacitor, and a first end of the fifth capacitor is connected to a first end of the second capacitor. The second end of the fifth capacitor is further connected to a second end of the third capacitor. The third resistor is connected in series to the second resistor. Because a direct current withstand voltage of a single capacitor is limited, a larger quantity of capacitors connected in series between the first input end and the second input end indicates a larger direct current voltage that can be borne.

In some possible implementations, a first end of the first resistor is connected to the first end of the second capacitor, and a second end of the first resistor is connected to a first end of the second resistor. The first filter module further includes a first differential mode inductor. A first end of the first differential mode inductor is connected to the first end of the second capacitor, the first end of the first differential mode inductor is further connected to the first end of the first resistor, and a second end of the first differential mode inductor is used as an output end of the first filter module. Alternatively, a first end of the first differential mode inductor is connected to the first end of the second capacitor, and a second end of the first differential mode inductor is connected to the first end of the first resistor. The conversion circuit usually includes a first conversion capacitor. The second capacitor, the third capacitor, the first differential mode inductor, and the first conversion capacitor in the conversion circuit form a $\pi$-shaped filter circuit of a C-L-C (capacitor-inductor-capacitor) structure, which may perform filtering processing on a differential mode electromagnetic interference signal of a non-measurement end. In addition, because filtering effect of the $\pi$-shaped filter circuit of the C-L-C structure is better than that of a filter circuit that includes only capacitors, on a premise that same filtering effect is achieved, a nominal capacitance value of the second capacitor, a nominal capacitance value of the third capacitor, and inductance of the first differential mode inductor may be small, so that a volume of the filter circuit can be further reduced.

In some possible implementations, the first inductor includes one common mode inductor or two differential mode inductors. A first end of the first inductor is connected to the first end of the second capacitor, and the first end of the first inductor is further connected to the first end of the first resistor. A second end of the first inductor is connected to the second end of the third capacitor, and the second end of the first inductor is further connected to a second end of the second resistor. A third end and a fourth end of the first inductor are used as output ends of the first filter module. The common mode inductor or the two differential mode inductors both can suppress the common mode EMI and the differential mode EMI that pass through the first filter module, so that the EMI transmitted from the first filter module to output ends of the second filter module and the converter through the conversion circuit can be reduced.

In some possible implementations, the second inductor includes one common mode inductor or two differential mode inductors. There is one first capacitor, and a second end of the first capacitor is connected to a first end or a second end of the second inductor. Alternatively, there are a plurality of first capacitors, a second end of at least one first capacitor is connected to a first end of the second inductor, and the at least one first capacitor is connected to a second end of the second inductor. The first end and the second end of the second inductor are two ends of different coils in the second inductor. A third end and a fourth end of the second inductor are used as input ends of the second filter module. The common mode inductor or the two differential mode inductors both can perform filtering processing on the differential mode EMI that passes through the second filter module, so that a case in which the differential mode EMI is transmitted from the second filter module to an output end of the converter can be reduced.

In some possible implementations, the second filter module further includes a seventh capacitor. A first end of the seventh capacitor is connected to a first end of the second inductor, and a second end of the seventh capacitor is connected to a second end of the second inductor. The conversion circuit usually includes a second conversion capacitor. The second conversion capacitor, the second inductor, and the seventh capacitor form a $\pi$-shaped filter circuit of a C-L-C (capacitor-inductor-capacitor) structure, which may perform filtering processing on a differential mode EMI of a measurement end.

In some possible implementations, the seventh capacitor includes a first sub-capacitor and a second sub-capacitor that are connected in series. The second end of the first capacitor is connected between the first sub-capacitor and the second sub-capacitor. A direct current voltage borne by the first capacitor is reduced, attenuation in a capacitance value of the first capacitor is reduced, and common mode filtering effect is improved.

In some possible implementations, the second filter module further includes a second differential mode inductor and an eighth capacitor. A second end of the second differential mode inductor, the third end of the second inductor, and a first end of the eighth capacitor are all connected, and a second end of the eighth capacitor is connected to the fourth end of the second inductor. Alternatively, a first end of the second differential mode inductor, the first end of the seventh capacitor, and the second end of the second inductor are all connected, a second end of the second differential mode inductor is connected to a first end of the eighth capacitor, and a second end of the eighth capacitor is connected to the second end of the seventh capacitor. The first end and the third end of the second inductor are two ends of a same coil in the second inductor, and the second end and the fourth end of the second inductor are two ends of a same coil in the second inductor. The first filter module can perform filtering processing on the differential mode electromagnetic interference signal. A second conversion circuit of the conversion circuit, and the second differential mode inductor one the seventh capacitor in the second filter module may further perform filtering processing on the differential mode EMI. The second inductor in the second filter module may further perform filtering processing on the common mode EMI. In this way, filtering effect can be further improved.

This application further provides a converter, including a conversion circuit and the filter circuit according to any one of the following implementations. The first filter module and the second filter module in the filter circuit are respectively electrically connected to the conversion circuit. The converter can implement all effect of the filter circuit.

In some possible implementations, the converter is connected between the first filter module and the second filter module. The second inductor is connected between the conversion circuit and a connection node that is of the first capacitor and that is in the second filter module.

In some other possible implementations, the second filter module is connected between the first filter module and the conversion circuit. The second inductor is connected between the first filter module and a connection node that is of the first capacitor and that is in the second filter module.

In this way, the second inductor can prevent the common mode electromagnetic interference signal of the non-measurement end from being conducted to the measurement end through the second conversion capacitor in the conversion circuit. That is, the second inductor can reduce coupling of the common mode EMI of the non-measurement end to the measurement end. Therefore, the second inductor can perform filtering processing on the common mode EMI of the measurement end.

In some possible implementations, the conversion circuit includes a first conversion capacitor, and the first filter circuit further includes the first differential mode inductor. The first end of the second capacitor is connected to the first end of the first differential mode inductor, the second end of the first differential mode inductor is connected to a first end of the first conversion capacitor, and the second end of the third capacitor is connected to a second end of the first conversion capacitor. In this way, the second capacitor, the third capacitor, the first differential mode inductor, and the first conversion capacitor in the conversion circuit form a $\pi$-shaped filter circuit of a C-L-C (capacitor-inductor-capacitor) structure, which may perform filtering processing on a differential mode EMI of a non-measurement end. In addition, because filtering effect of the $\pi$-shaped filter circuit of the C-L-C structure is better than that of a filter circuit that includes only capacitors, on a premise that same filtering effect is achieved, a nominal capacitance value of the second capacitor, a nominal capacitance value of the third capacitor, and inductance of the first differential mode inductor may be small, so that a volume of the filter circuit can be further reduced.

In some possible implementations, the conversion circuit further includes a second conversion capacitor, and the second filter module further includes the second differential mode inductor. The first end of the second differential mode inductor is connected to a first end of the second conversion capacitor, and the fourth end of the second inductor is connected to the first end of the second conversion capacitor. In this way, the second conversion capacitor in the conversion circuit, the second differential mode inductor, and the seventh capacitor form a $\pi$-shaped filter circuit of a C-L-C (capacitor-inductor-capacitor) structure, which may perform filtering processing on a differential mode EMI of a measurement end.

In some other possible implementations, the conversion circuit further includes a second conversion capacitor, and the second filter module further includes a second differential mode inductor. The third end and the fourth end of the second inductor are respectively connected to two ends of the second conversion capacitor. In this way, the second conversion capacitor in the conversion circuit, the second inductor, and the seventh capacitor form a $\pi$-shaped filter circuit of a C-L-C (capacitor-inductor-capacitor) structure, which may perform filtering processing on a differential mode EMI of a measurement end.

This application further provides a power supply system, including a direct current power supply and the foregoing converter according to any one of the following implementations. The direct current power supply is electrically connected to the converter. The power supply system can achieve all effect of the converter.

## BRIEF DESCRIPTION OF DRAWINGS

To describe technical solutions in embodiments of this application more clearly, the following briefly describes the accompanying drawings for describing embodiments of this application. It is clear that the accompanying drawings in the following descriptions show merely some embodiments of this application, and a person of ordinary skill in the art may still derive other drawings from these accompanying drawings without creative efforts.

FIG. 1 is a diagram of an architecture of an application scenario according to an embodiment of this application;

FIG. 2 is a circuit diagram of a conversion circuit according to an embodiment of this application;

FIG. 3 is a waveform diagram of a voltage of a node D relative to a voltage of a node B11/F11 in the embodiment shown in FIG. 2;

FIG. 4 is a circuit diagram of a conversion circuit according to another embodiment of this application;

FIG. 5 is a circuit diagram used when a CE test is performed on the conversion circuit shown in FIG. 2;

FIG. 6 is a circuit diagram of a converter in a related technology;

FIG. 7 is a circuit diagram of a converter in another related technology;

FIG. 8 is a diagram of a curve that an actual capacitance value of a filter capacitor CY changes as a direct current voltage difference between a node A1 and a node E1 changes in the converter shown in FIG. 7;

FIG. 9a is a circuit diagram of a filter circuit according to a first embodiment of this application;

FIG. 9b is a circuit diagram of a converter according to a first embodiment of this application;

FIG. 10a is a circuit diagram of a converter according to a second embodiment of this application;

FIG. 10b is a circuit diagram of a converter according to a third embodiment of this application;

FIG. 11 is a circuit diagram of a converter according to a fourth embodiment of this application;

FIG. 12 is a circuit diagram of a converter according to a fifth embodiment of this application;

FIG. 13 is a circuit diagram of a converter according to a sixth embodiment of this application;

FIG. 14 is a circuit diagram of a converter according to a seventh embodiment of this application;

FIG. 15 is a circuit diagram of a converter according to an eighth embodiment of this application;

FIG. 16 is a circuit diagram of a converter according to a ninth embodiment of this application;

FIG. 17 is a circuit diagram of a converter according to a tenth embodiment of this application;

FIG. 18 is a circuit diagram of a converter according to an eleventh embodiment of this application;

FIG. 19 is a circuit diagram of a converter according to a twelfth embodiment of this application;

FIG. 20 is a circuit diagram of a converter according to a thirteenth embodiment of this application; and

FIG. 21 is a circuit diagram of a converter according to a fourteenth embodiment of this application.

Reference numerals: 10: solar photovoltaic panel; 20: converter; 30: inverter; 40: conversion circuit; 50: filter circuit; Cc5: filter capacitor; Cc6: differential mode filter capacitor; CY3: first capacitor; 51: first filter module; 52: second filter module; 61: non-measurement end LISN; and 62: measurement end LISN.

## DESCRIPTION OF EMBODIMENTS

The following clearly and completely describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

The term "and/or" in this specification describes only an association relationship for describing associated objects and indicates that three relationships may exist. For example, A and/or B may represent the following three cases: Only A exists, both A and B exist, and only B exists.

In this specification and claims in embodiments of this application, the terms "first", "second", and the like are intended to distinguish between different objects but do not indicate a particular order of the objects. For example, a first target object, a second target object, and the like are used to distinguish between different target objects, but are not used to describe a specific order of the target objects.

In embodiments of this application, the word such as "example" or "for example" is used to represent an example, an illustration, or a description. Any embodiment or design scheme described as an "example" or "for example" in embodiments of this application should not be explained as being more preferred or having more advantages than another embodiment or design scheme. To be precise, the word such as "example" or "for example" is intended to present a related concept in a specific manner.

In the description of embodiments of this application, unless otherwise specified, "plurality" means two or more. For example, a plurality of processing units mean two or more processing units, and a plurality of systems mean two or more systems.

To better understand a power supply system provided in this application, related terms in this application are explained.

A DC-DC (Direct Current-Direct Current, direct current-direct current) converter: is an electric energy conversion apparatus that converts input direct current electric energy into direct current electric energy at different voltages or a same voltage and that outputs the direct current electric energy.

Power supply rail: is a set of nodes that have a same direct current voltage and are electrically connected to each other with low impedance in a DC-DC converter, and may also be a power supplying rail or a voltage rail.

Non-isolated DC-DC converter: There is a common power supply rail between an input end and an output end of a DC-DC converter, but the input end and the output end are not physically electrically isolated.

Common mode filtering: filters a common mode electromagnetic interference signal.

Differential mode filtering: filters a common mode electromagnetic interference signal.

Differential mode EMI signal: is an EMI signal with an opposite polarity.

Differential mode EMI voltage: EMI of two power supply rails connected to the ground has a same amplitude but an opposite polarity. If the EMI voltages of the two power supply rails, on a port, connected to the reference ground end are respectively U1 and U2, the differential mode EMI voltage is (U1-U2)/2.

Common mode EMI signal: is an EMI signal with a same polarity.

Common mode EMI voltage: EMI of two power supply rails connected to the ground has a same amplitude and a same polarity. If the EMI voltages of the two power supply rails, on a port, connected to the reference ground end are respectively U1 and U2, the common mode EMI voltage UCM is (U1+U2)/2.

Nominal capacitance value: is a nominal capacitance value specified for a capacitor.

Actual capacitance value: is a capacitance value of a capacitor in actual use.

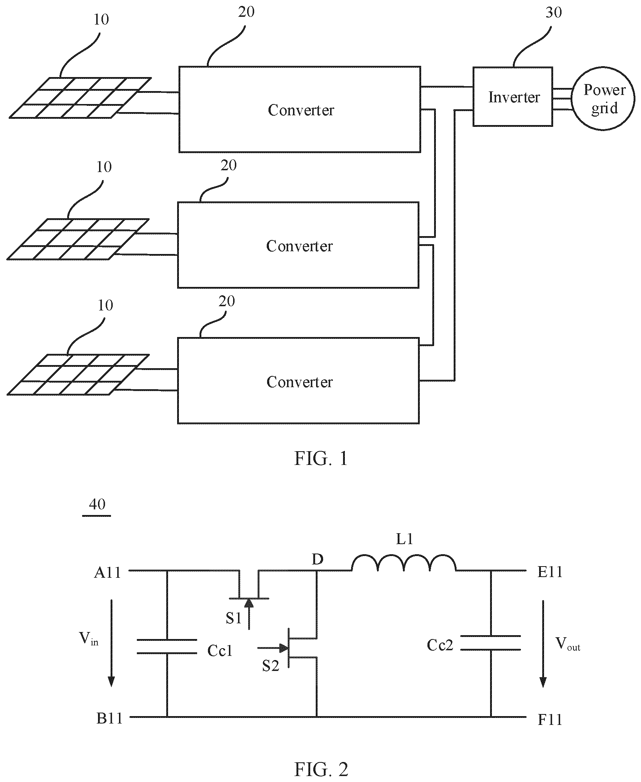

FIG. 1 is a diagram of an architecture of a power supply system. As shown in FIG. 1, the power supply system includes a plurality of solar photovoltaic panels 10, a plurality of converters 20, and an inverter 30. A quantity of solar photovoltaic panels 10 is the same as a quantity of converters 20. The plurality of solar photovoltaic panels 10 are electrically connected to the plurality of converters 20 in a one-to-one correspondence. The plurality of converters 20 are all connected to the inverter 30. The converter 20 may be a DC-DC converter, and may be specifically a non-isolated DC-DC converter. The solar photovoltaic panel 10 may absorb solar energy, convert the solar energy into direct current electric energy at a fixed voltage, and transfer the direct current at the fixed voltage to the converter 20. The converter 20 converts the direct current electric energy of the fixed voltage into direct current electric energy of different voltages or a same voltage, and transfers the direct current electric energy to the inverter 30. The inverter 30 converts the direct current electric energy of different voltages or a same voltage into constantfrequency and constant-voltage or frequency-modulated and voltage-regulated alternating current electric energy, and transfers the alternating current electric energy to a power grid.

It may be understood that in this embodiment, the solar photovoltaic panel 10 outputs a direct current, and therefore, the solar photovoltaic panel 10 may be used as a direct current power supply. In another embodiment, the direct current power supply in the power supply system may alternatively be an energy storage battery, a fuel cell, or a power supply that generates electric energy in another manner and can input or output direct current electric energy.

The converter 20 usually includes a conversion circuit. In an embodiment, a conversion circuit 40 may be a synchronous buck (buck chopper) circuit shown in FIG. 2. An input voltage $V_{in}$ of the conversion circuit 40 may be from 110 to 120 V, an output voltage $V_{out}$ may be from 20 to 70 V, and a working current may be from 18 to 21 A. As shown in FIG. 2, the conversion circuit 40 includes a first conversion capacitor Cc1, a second conversion capacitor Cc2, a first switching transistor S1, a second switching transistor S2, a converter inductor L1, a first input A11, a second input B11, a first output E11, and a second output F11. Two ends of the first conversion capacitor Cc1 are respectively connected to the first input A11 and the second input B11. Two ends of the second conversion capacitor Cc2 are respectively connected to the first output E11 and the second output F11. The second switching transistor S2 is connected in parallel to the first conversion capacitor Cc1, and the second switching transistor S2 is connected between the first conversion capacitor Cc1 and the second conversion capacitor Cc2. A first electrode of the first switching transistor S1 is connected to one end of the first conversion capacitor Cc1 and the first input A11. A second electrode of the first switching transistor S1 and a first electrode of the second switching transistor S2 are connected to a node D. The first electrode is one of a source or a drain, and the second electrode is the other one of the source or the drain. One end of the converter inductor L1 is connected to the first electrode of the second switching transistor S2. The other end of the converter inductor L1 is connected to one end of the second conversion capacitor Cc2 and the first output E11.

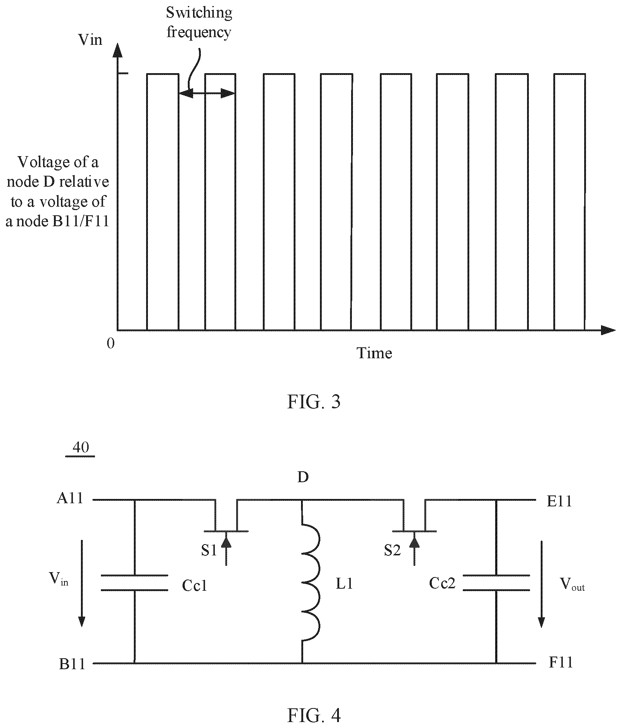

The first switching transistor S1 may be an active switch device such as an IGBT (Insulated Gate Bipolar Transistor, insulated gate bipolar transistor) or a MOSFET (Metal-Oxide Semiconductor Field-Effect Transistor, metal-oxide semiconductor field-effect transistor). The second switching transistor S2 may be an active switch device such as an IGBT or an MOSFET, or may be a passive switch device such as a diode. The active switch device may be driven by an auxiliary power supply and a drive circuit. The auxiliary power supply or the drive circuit may drive the first switching transistor S1 and the second switching transistor S2 to be alternately turned on at a same working frequency. Herein, the working frequency may also be referred to as a switching frequency, and the switching frequency may be $60 \pm 10$ kHz or $120 \pm 20$ kHz. For a waveform diagram of a voltage of the node D relative to a voltage of a node B11, F11, refer to FIG. 3. A voltage to ground may be a rectangular wave voltage. When the first switching transistor S1 is turned on and the second switching transistor S2 is turned off, a rectangular wave is at a peak value, and an input voltage is $V_{in}$. When the first switching transistor S1 is turned off and the second switching transistor S2 is turned on, the rectangular wave is at a valley value, and the input voltage is 0. After the rectangular wave voltage is smoothed by the converter inductor L1 and the second conversion capacitor Cc2, an output voltage $V_{out}$ with a specific ripple is formed. During application, the input voltage $V_{in}$ is a fixed voltage, and the output voltage $V_{out}$ may be adjusted within a wide range.

In another embodiment, a conversion circuit 40 may be a circuit other than a synchronous buck (buck) circuit, for example, a buck-boost (buck-boost) circuit shown in FIG. 4. The devices included in the conversion circuit 40 are the same as those included in the synchronous buck circuit shown in FIG. 2. A difference lies in that, on a basis of the synchronous buck circuit shown in FIG. 2, positions of the second switching transistor S2 and the converter inductor L1 in the buck-boost circuit shown in FIG. 4 are changed.

The following mainly uses the synchronous buck circuit shown in FIG. 2 as an example to describe the converter in embodiments of this application.

When the converter is sold or used, the EMC standard needs to be met. To be specific, electromagnetic interference generated by the converter during normal running cannot exceed an EMC limit. In addition, the converter has a specified anti-interference capability to electromagnetic interference existing in an environment. A CE (Conducted Emission, conducted emission) test is an important test item of an EMC test, and is mainly used to measure conducted emission EMI on a port of the converter. When the converter includes only a conversion circuit, and the CE test is performed on the converter, all ports of the conversion circuit need to be externally connected to an LISN (Line Impedance Stabilization Network, line impedance stable network). There is an EMC limit requirement on an output of the conversion circuit, but there is no EMC limit requirement on an input of the conversion circuit. Therefore, a port, that is, an input with the EMC limit requirement may be referred to as a measurement end, and a port, that is, an output without EMC limit requirement may be referred to as a non-measurement end.

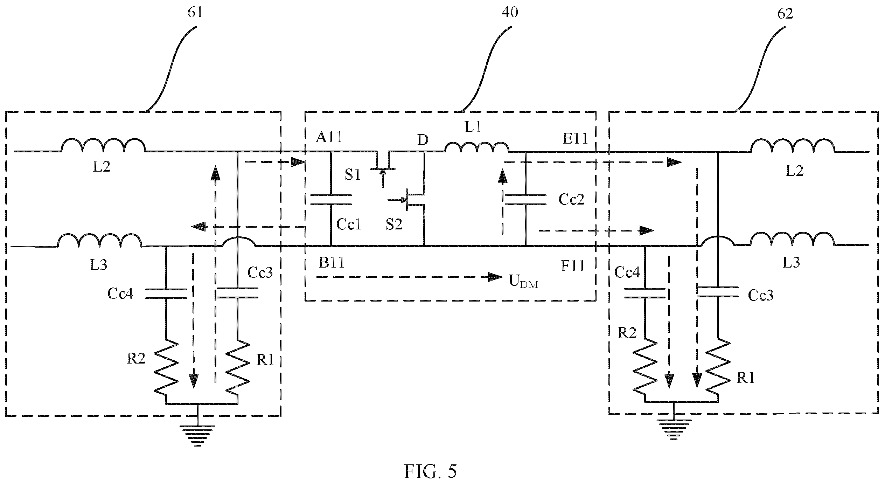

As shown in FIG. 5, the first input A11 and the second input B11 of the conversion circuit 40 are connected to a non-measurement end LISN61. The first output E11 and the second output F11 of the conversion circuit 40 are connected to a measurement end LISN62. The non-measurement end LISN61 and the measurement end LISN62 have a same structure, and both include a first LISN inductor L2, a second LISN inductor L3, a first LISN capacitor Cc3 and a first LISN resistor R1 that are connected in series, and a second LISN capacitor Cc4 and a second LISN resistor R2 that are connected in series. One end of the first LISN inductor L2 is connected to a series circuit of the first LISN capacitor Cc3 and the first LISN resistor R1, and is connected to the first input A11 or the first output E11. One end that is of the first LISN resistor R1 and that is not connected to the first LISN capacitor Cc3 is grounded. One end of the second LISN inductor L3 is connected to a series circuit of the second LISN capacitor Cc4 and the second LISN resistor R2, and is connected to the second input B1 or the second output F11. One end that is of the second LISN resistor R2 and that is not connected to the second LISN capacitor Cc4 is grounded.

As shown in FIG. 5, a differential mode EMI current of the non-measurement end forms a voltage to ground $U_{DM}$ at the second input B11, and the voltage to ground $U_{DM}$ at the second input B11 is transmitted to the conversion circuit 40 through a power supply rail on which the second input B11 and the second output F11 are located, and is transmitted to the first output E11, the second output F11, and the measurement end, that is, CE between the first output E11 and the second output F11 may exceed an EMC limit. Because the second conversion capacitor Cc2 has coupling effect on an alternating current signal, the first output E11 and the second output F11 have EMI voltages that are close, and voltages to ground of the two ports are both the $U_{DM}$ voltage.

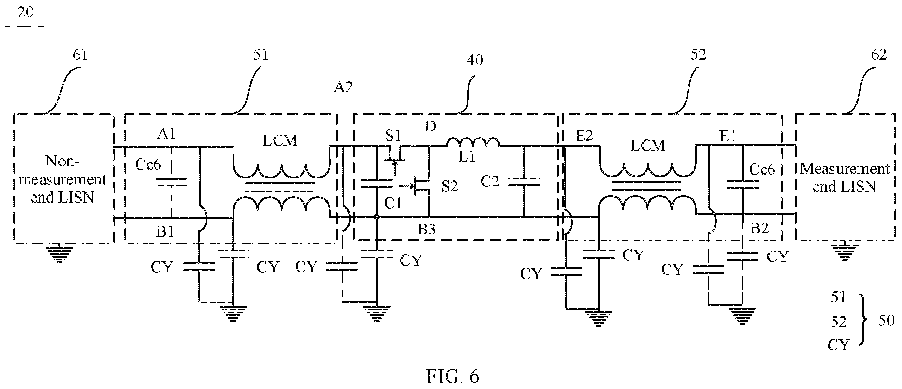

To enable the converter to meet the EMC limit requirement, a filter circuit may be disposed in the converter. That is, as shown in FIG. 6, the converter 20 includes the conversion circuit 40 and a filter circuit 50. The filter circuit 50 is electrically connected to the conversion circuit 40. Still refer to FIG. 6. In a related technology, the filter circuit 50 includes a first filter module 51, a second filter module 52, and eight filter capacitors CY. Both the first filter module 51 and the second filter module 52 include a common mode inductor LCM and a differential mode filter capacitor Cc6. The differential mode filter capacitor Cc6 in the first filter module 51 is connected between a node A1 and a node B1. Two ends of a coil of the common mode inductor LCM in the first filter module 51 are respectively connected to the node A1 and a node A2. Two ends of the other coil are respectively connected to the node B1 and a node B3. The differential mode filter capacitor Cc6 in the second filter module 52 is separately connected to a node E1 and a node B2. Two ends of a coil of the common mode inductor LCM in the second filter module 52 are respectively connected to a node E2 and the node E1. Two ends of the other coil are respectively connected to the node B3 and the node B2. Ends of six filter capacitors CY in the eight filter capacitors CY are respectively connected to the nodes A1, A2, B1, B2, E1, and E2. Ends of both of the other two filter capacitors are connected to the node B3. The other ends of all the eight filter capacitors CY are grounded.

As shown in FIG. 6, the eight filter capacitors CY and the common mode inductor LCM may perform common mode filtering on a signal that passes through the filter circuit 40, that is, filter a common mode electromagnetic interference signal. The differential mode filter capacitor Cc6 in the first filter module 51 and a differential mode filter capacitor Cc7 in the second filter module 52 may perform differential mode filtering on a signal that passes through the filter circuit 40, that is, filter a differential mode electromagnetic interference signal.

Because the filter capacitor CY is grounded, the filter capacitor CY is connected to a chassis. Based on a mandatory standard requirement of electrical safety, a contact current limit that can be perceived by a human body is $I \leq 1$ mA. An example in which a frequency is f=50 Hz and a voltage is U=380 V is used. According to a formula $I=2\pi fCU$ of a ground leakage current, $C \leq 8.377$ nF may be obtained. C herein represents a sum of nominal capacitance values of the eight filter capacitors CY shown in FIG. 6. Therefore, the nominal capacitance value of each filter capacitor CY is hundreds of pF to 1000 pF. A start frequency of the CE test is 150 kHz. To better suppress EMI above 150 kHz, a resonance frequency

$f_0$ of the filter circuit 40 may be calculated by using the following formula:

$$f_0 = \frac{1}{2\pi\sqrt{CL_{CM}}}$$

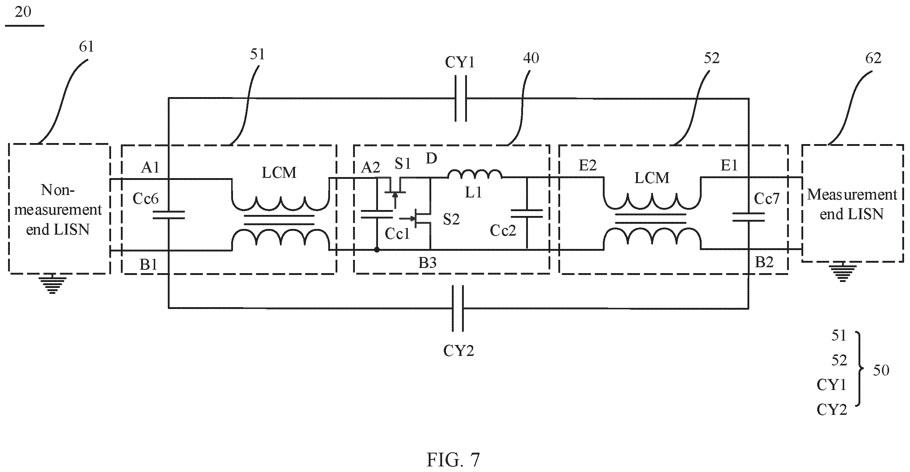

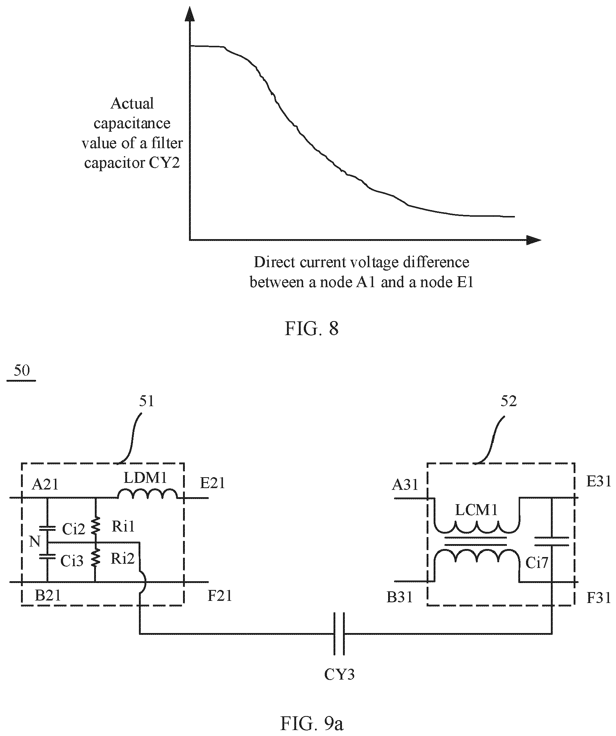

In the formula, C represents the sum of the nominal capacitance values of the eight filter capacitors CY. $L_{CM}$ represents inductance of the common mode inductor LCM. The resonance frequency is configured to be a fraction of 150 kHz, for example, 1/3. C=4 nF and the resonance frequency of $f_0$=50 kHz (1/3*150 kHz) are used as an example. According to the formula for calculating the resonance frequency, it may be obtained that the inductance of the common mode inductor LCM is 2.5 mH. To match a CY nominal capacitance value limited by a safety leakage current, the inductance of the common mode inductor LCM is usually several to dozens of mH. A common mode inductor of 10 mH/20 A is used as an example. The common mode inductor has a volume of 33 mm*33 mm*20 mm and is heavy, which causes high costs.
In addition, because the CY capacitor is grounded, a safety regulation requires a high capacitor level. For example, the capacitor is required to be higher than a Y2 level, and capacitor costs are high.
In another related technology, a difference from the related technology shown in FIG. 6 lies in that, as shown in FIG. 7, two filter capacitors CY1 and CY2 are used to replace the eight filter capacitors CY in FIG. 6, two ends of the filter capacitor CY1 are respectively connected to the node A1 and the node E1, and two ends of the filter capacitor CY2 are respectively connected to the node B1 and the node B2.
As shown in FIG. 7, during application, a direct current voltage difference between the node B1 and the node B2 is 0. Therefore, a nominal capacitance value of the filter capacitor CY2 that is bridged between the node B1 and the node B2 basically changes as a working condition changes. However, a direct current voltage difference between the node A1 and the node E1 changes greatly. As shown in FIG. 8, an actual capacitance value of the filter capacitor CY2 that is bridged between the node A1 and the node E1 decreases as the direct current voltage difference between the node A1 and the node E1 increases. In FIG. 8, a horizontal coordinate represents the direct current voltage difference between the node A1 and the node E1, and a vertical coordinate represents the actual capacitance value of the filter capacitor CY2, and may also be referred to as a differential capacitance value under a direct current voltage.
When deviation between actual capacitance values of the filter capacitor CY1 and the filter capacitor CY2 results in that common mode EMI of the measurement end is far greater than EMI conducted through a current of the common mode inductor LCM, a common mode suppression ratio, that is, a ratio of a common mode EMI voltage $U_{CM}$ of the measurement end LISN to a differential mode EMI voltage $U_{DM}$ of the non-measurement end LISN, may be calculated according to the following formula:

$$\frac{U_{CM}}{U_{DM}} \approx \frac{C_{Y2}-C_{Y1}}{C_{Y2}+C_{Y1}} \times \frac{Z_{LISN(CM)}}{[j2\pi f(C_{Y2}-C_{Y1})]^{-1}+2Z_{LISN(CM)}}$$

The ratio may measure a capability of the filter circuit 40 to suppress differential mode EMI of the non-measurement end LISN to common mode EMI of the measurement end LISN. In the foregoing formula, $C_{Y1}$ represents an actual capacitance value existing when the filter capacitor CY1 bears a direct current voltage. $C_{Y2}$ represents an actual capacitance value existing when the filter capacitor CY2 bears a direct current voltage. $Z_{LISN(CM)}$ represents common mode impedance of the LISN. f represents a working frequency of the converter 20. j represents an imaginary unit. An example in which the nominal capacitance value of the filter capacitor CY1 is 100 nF, the nominal capacitance value of the filter capacitor CY2 is 68 nF, and the working frequency is f=240 kHz is used. When the direct current voltage difference between the node A1 and the node E1 is 30 V, $C_{Y1}$=$C_{Y2}$=68 nF, and the common mode suppression ratio is as follows: $U_{CM}$/$U_{DM}$=33.0 dB. When the direct current voltage difference between the node A1 and the node E1 is 90 V, $C_{Y1}$=20 nF, $C_{Y2}$=68 nF, and $U_{CM}$/$U_{DM}$=11.3 dB. Because the direct current voltage difference between the node A1 and the node E1 may represent a direct current voltage difference between the input and the output, the common mode suppression ratio of the filter circuit 40 sharply changes as the direct current voltage difference between the input and the output changes, and a maximum difference between common mode suppression ratios is 21.7 dB. In addition, a worst common mode suppression ratio causes poor common mode suppression performance, and consequently, EMC of the converter 20 exceeds the EMC limit. Therefore, if good common mode suppression performance of the converter 20 is required, a direct current voltage difference range between the input and the output needs to be narrowed, thereby limiting a direct current voltage difference range of the converter 20 that meets the EMC limit.
In addition, as shown in FIG. 7, the filter capacitor CY1, the differential mode filter capacitor Cc6, the filter capacitor CY2, and a differential mode filter capacitor Cc7 form a loop. In this way, the filter capacitor CY1 and the filter capacitor CY2 may couple the differential mode EMI signal from the non-measurement end to the measurement end. A differential mode EMI voltage between the node A1 and the node B1 is $U_{Dmi}$, and impedance of leakage inductance of the common mode inductor LCM1 is far greater than capacitive reactance of the differential mode filter capacitor Cc6.

Therefore, a differential mode EMI voltage $U_{DMo}$ coupled by the node E1 and the node B2 through the filter capacitor CY1 and the filter capacitor CY2 is as follows:

$$U_{DMo} = U_{DMi} \times \frac{C_{c6}^{-1}}{C_{c6}^{-1} + C_{Y1}^{-1} + C_{Y2}^{-1}}$$

In the formula, $U_{Dmi}$ represents the differential mode EMI voltage between the node A1 and the node B1. $C_{c6}$ represents an actual capacitance value existing when the filter capacitor Cc6 bears a direct current voltage. $C_{Y1}$ represents an actual capacitance value existing when the filter capacitor CY1 bears a direct current voltage. $C_{Y2}$ represents an actual capacitance value existing when the filter capacitor CY2 bears a direct current voltage. When $C_{Y1}>0.1\,C_{c6}$ and $C_{Y2}>0.1\,C_{c6}$, $U_{DMo}/U_{Dmi}>26.4$ dB, indicating that common mode filtering effect of the filter circuit is poor. Therefore, to achieve good common mode filtering effect, $C_{Y1}$ and $C_{Y2}$ need to be far less than $C_{c6}$.
In addition, the resonance frequency $f_0$ may be calculated by using the following formula:

$$f_0 = \frac{1}{2\pi\sqrt{(C_{Y1}+C_{Y2})\,L_{CM}}}$$

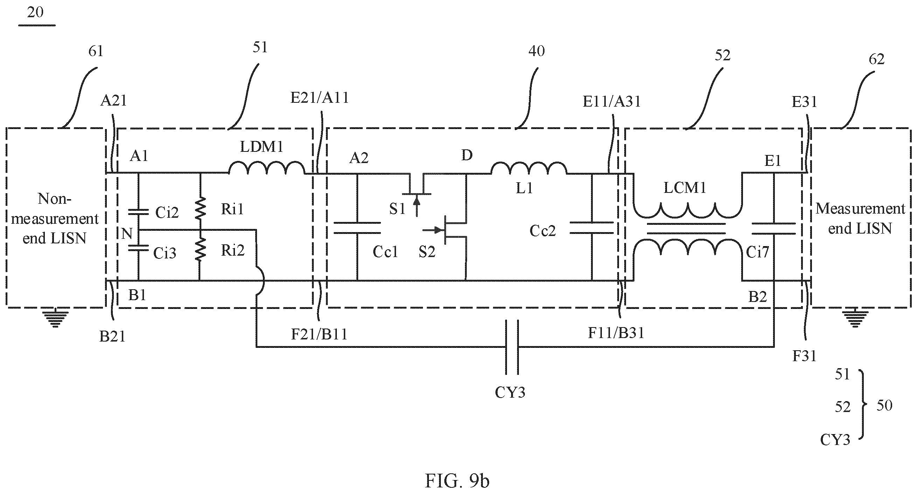

In the foregoing formula, $C_{Y1}$ represents an actual capacitance value existing when the filter capacitor CY1 bears a direct current voltage. $C_{Y2}$ represents an actual capacitance value existing when the filter capacitor CY2 bears a direct current voltage. $L_{CM}$ represents inductance of the common mode inductor LCM in the second filter module 52. An example in which $L_{CM}=75\,\mu H$, and the nominal capacitance values of both the filter capacitor CY1 and the filter capacitor CY2 are 100 nF is used. If a direct current voltage of $C_{Y1}$ is considered for the actual capacitance values, $C_{Y1}=40$ to 90 nF, and $C_{Y2}=100$ nF, which are used in the foregoing formula for calculation. Then, $f_0=42.2$ to 49.1 kHz is obtained. Usually, both $f_0/2$-$2f_0$ are within a frequency range in which parallel resonance is likely to occur. Therefore, a frequency range in which parallel resonance is likely to occur is from 21.1 to 98.2 kHz. A switching frequency of the converter 20 is $60\pm10$ kHz, and falls within the frequency range in which resonance is likely to occur, which indicates that parallel resonance is likely to occur in the filter circuit 50. To decrease the resonance frequency $f_0$ to avoid parallel resonance, the nominal capacitance values of the filter capacitor CY1 and the filter capacitor CY2 need to be increased, and the inductance $L_{CM}$ of the common mode inductor needs to be increased. However, to obtain good common mode filtering effect, values of $C_{Y1}$ and $C_{Y2}$ do not exceed 1/10 of $C_{c6}$. Therefore, a parallel resonance problem cannot be avoided by increasing $C_{Y1}$ and $C_{Y2}$. However, increasing $L_{CM}$ causes a large and bulk volume of the common mode inductor LCM, which causes high costs of the filter circuit.
In view of this, an embodiment of this application provides a filter circuit 50, which may be used in the conversion circuit 40 shown in FIG. 4 or FIG. 5.
As shown in FIG. 9a, the filter circuit 50 includes a first filter module 51, a second filter module 52, and a first capacitor CY3. As shown in FIG. 9b, the first filter module 51 and the second filter module 52 are separately connected to a conversion circuit 40. Two ends of the first capacitor CY3 are respectively connected to the first filter module 51 and the second filter module 52.
As shown in FIG. 9b, the first filter circuit 50 includes a first input A21, a second input B21, a first output E21, a second output F21, a second capacitor Ci2, a third capacitor Ci3, a first resistor Ri1, a second resistor Ri2, and a first differential mode inductor LDM1. The first input A21 and the second input B21 may be used as inputs of the filter circuit 50, as shown in FIG. 9b, or may be used as input ends of a converter 20, or may be non-measurement ends, and are connected to a non-measurement end LISN when a CE test is performed on the converter 20. The first output E21 is connected to a first input A11 of the conversion circuit 40. The second output F21 is connected to a second input B11 of the conversion circuit 40.
As shown in FIG. 9a, the second capacitor Ci2 and the third capacitor Ci3 are connected in series, and are connected between the first input A21 and the second input B21. For example, a first end of the second capacitor Ci2 is connected to the first input A21, a second end of the second capacitor Ci2 is connected to a first end of the third capacitor Ci3, and a second end of the third capacitor Ci3 is connected to the second input B21. In this embodiment, nominal capacitance values of the second capacitor Ci2 and the third capacitor Ci3 are the same, and both the second capacitor Ci2 and the third capacitor Ci3 include three capacitors that are connected in parallel. Each capacitor may be a surface-mount ceramic capacitor. For example, a nominal capacitance value of each surface-mount ceramic capacitor is 10 $\mu F$, and the nominal capacitance values of both the second capacitor Ci2 and the third capacitor Ci3 are 30 $\mu F$. In another embodiment, the second capacitor Ci2 and the third capacitor Ci3 may include a larger quantity of capacitors that are connected in parallel, or may include a plurality of capacitors that are connected in series.
In addition, in this embodiment, the second capacitor Ci2 and the third capacitor Ci3 may be devices in the filter circuit 50. In another embodiment, a first conversion capacitor Cc1 in the conversion circuit 40 may be a capacitor network, that is, including a plurality of single capacitors that are connected in series or in parallel. Two single capacitors that are connected in series may be selected from the first conversion capacitor Cc1 as the second capacitor Ci2 and the third capacitor Ci3, and a connection node between the two single capacitors that are connected in series is used as an EMI voltage division point N.

As shown in FIG. 9b, the first resistor Ri1 is connected in series to the second resistor Ri2, the first resistor Ri1 is connected in parallel to the second capacitor Ci2, and the second resistor Ri2 is connected in parallel to the third capacitor Ci3. For example, a first end of the first resistor Ri1 and the first end of the second capacitor Ci2 are connected to a node A1. A second end of the first resistor Ri1 and the second end of the second capacitor Ci2 are connected to a node N, and the second end of the first resistor Ri1 is connected to a first end of the second resistor Ri2. The first end of the second resistor Ri2 and the first end of the third capacitor Ci3 are connected to the node N, and a second end of the second resistor Ri2 and the second end of the third capacitor Ci3 are connected to a node B1. Because the second capacitor Ci2 is connected in parallel to the first resistor Ri1, voltages at two ends of the second capacitor Ci2 are the same as voltages at two ends of the first resistor Ri1. Similarly, voltages at two ends of the third capacitor Ci3 are the same as voltages at two ends of the second resistor Ri2. The first resistor Ri1 and the second resistor Ri2 are connected in series, and are connected between the node A1 and the node B1. Therefore, the first resistor Ri1 and the second resistor Ri2 may divide a direct current voltage between the node A1 and the node B1. In addition, the node N is an EMI voltage division point formed between the second capacitor Ci2 and the third capacitor Ci3. Under separate effect of differential mode EMI, the EMI voltage divider point N and the ground are at a same alternating current potential. When a direct current voltage between the node A1 and the node B1 changes, direct current voltages of the second capacitor Ci2 and the third capacitor Ci3 change at the same time, and actual capacitance values of the second capacitor Ci2 and the third capacitor Ci3 also change at the same time. In this way, a ratio of the actual capacitance value of the second capacitor Ci2 to the actual capacitance value of the third capacitor Ci3 may remain unchanged under the direct current voltages. In addition, a voltage division ratio of the EMI voltage division point N remains unchanged, that is, does not change as the direct current voltage between the node A1 and the node B1 changes, that is, does not change as a direct current voltage between the first input A21 and the second input B21 changes. Therefore, under separate effect of differential mode EMI, the node N and the ground are always at a same alternating current potential.

To make the direct current voltages, obtained through division, of the second capacitor Ci2 and the third capacitor Ci3 the same, in this embodiment, resistance values of the first resistor Ri1 and the second resistor Ri2 are the same. For example, the resistance values of the first resistor Ri1 and the second resistor Ri2 are both 200 kΩ.

As shown in FIG. 9a, the first differential mode inductor LDM1 is connected between the first input A21 and the first output E21. For example, as shown in FIG. 9, one end of the first differential mode inductor LDM1 is connected to the node A1. The other end of the first differential mode inductor LDM1, the first output E21, and the first end of the first conversion capacitor Cc1 are connected to the node A2. Inductance of the first differential mode inductor LDM1 may be 5 μH.

As shown in FIG. 9a, the second filter module 52 includes a third input end A31, a fourth input end B31, a third output end E31, a fourth output end F31, a second inductor LCM1, and a seventh capacitor Ci7. As shown in FIG. 9b, the third input end A31 is connected to a first output E11 of the conversion circuit 40, and the fourth input end B31 is connected to a second output F11 of the conversion circuit 40. The third output end E31 and the fourth output end F31 are used as outputs of the filter circuit 50, or may be used as output ends of the converter 20, or may be used as measurement ends. When the CE test is performed on the converter 20, the measurement end LISN may be connected at the third output end E31 and the fourth output end F31.

As shown in FIG. 9a, the second inductor LCM1 may be a common mode inductor. A first end of the second inductor LCM1 is connected to the fourth output end F31, a second end of the second inductor LCM1 is connected to the third output end E31, a third end of the second inductor LCM1 is connected to the third input end A31, and a fourth end of the second inductor LCM1 is connected to the fourth input end B31. A magnetic core of the second inductor LCM1 may be a nanocrystalline magnetic core, an amorphous magnetic core, or a manganese-zinc ferrite magnetic core. Inductance of the second inductor LCM1 may be 75 μH.

As shown in FIG. 9a, the seventh capacitor Ci7 is connected between the third output end E31 and the fourth output end F31. For example, as shown in FIG. 9b, a first end of the seventh capacitor Ci7 and the third output end E31 are connected to a node E1, and a second end of the seventh capacitor Ci7 and the fourth output end F31 are connected to a node B2. The first end of the seventh capacitor Ci7 is further connected to the second end of the second inductor LCM1, and the second end of the seventh capacitor Ci7 is further connected to the first end of the second inductor LCM1.

As shown in FIG. 9b, a first end of the first capacitor CY3 may be connected between the second capacitor Ci2 and the third capacitor Ci3. For example, the first end of the first capacitor CY3 may be connected to the EMI voltage division point N. A second end of the first capacitor CY3, the first end of the second inductor LCM1, and the second end of the seventh capacitor Ci7 are all connected to the node B2. The first capacitor CY3 may be a single capacitor, or may be a capacitor network that includes a plurality of single capacitors that are connected in series or in parallel. A nominal capacitance value of the first capacitor CY3 may be 1 μF. Two ends of the first capacitor CY3 both are not grounded, and the first capacitor CY3 may be a capacitor with a low electrical safety level, thereby reducing costs of the first capacitor CY3. The first capacitor CY3 may be a single capacitor, or may include a plurality of single capacitors that are connected in series, in parallel, or in series and in parallel.

A transmission zero may be configured for the filter circuit 50 at a specific frequency, to construct a band-stop filter circuit. A relationship among the nominal capacitance value of the second capacitor Ci2, the nominal capacitance value of the third capacitor Ci3, the nominal capacitance value of the first capacitor CY3, and the inductance of the second inductor LCM1 may meet the following formula:

$$C_{i2}=C_{i3}\times\cfrac{\omega L_{CM1}+\cfrac{1}{\omega C_{i2}}+\cfrac{1}{\omega C_{Y3}}}{\omega L_{CM1}-\cfrac{1}{\omega C_{Y3}}}$$

In the formula, $C_{i2}$ represents the actual capacitance value of the second capacitor Ci2. $C_{i3}$ represents the actual capacitance value of the third capacitor Ci3. $\omega$ represents an angular frequency of the converter 20, and $\omega$ is $2\pi f$. f represents a working frequency of the converter 20. $C_{Y3}$ represents an actual capacitance value of the first capacitor CY3. $L_{CM1}$ represents the inductance of the second inductor LCM1. An example in which the zero is configured at f=240 kHz is used. Based on LCM=75 $\mu$H and the following actual capacitance values for which direct current voltages are considered: $C_{i1}$=30$\times$0.35=10.5 $\mu$F and $C_{Y3}$=0.35 $\mu$F, the actual capacitance value of the second capacitor Ci2 is 10.864 $\mu$F. The nominal capacitance value of the second capacitor Ci2 is 31.04 $\mu$F. 31.04 $\mu$F can be obtained by connecting a capacitor of 30 $\mu$F to a capacitor of 1 $\mu$F and a capacitor of 47 nF in parallel. If the filter transmission zero does not need to be constructed, on a filtering frequency band, the inductance of LCM1 is far greater than the nominal capacitance values of the first capacitor CY, the second capacitor Ci2, and the third capacitor Ci3, and Ci2=Ci3=30 $\mu$F.

As shown in FIG. 9b, the second capacitor Ci2, the third capacitor Ci3, the first differential mode inductor LDM1, and the first conversion capacitor Cc1 in the conversion circuit 40 form a $\pi$-shaped filter circuit of a C-L-C (capacitor-inductor-capacitor) structure, which may perform filtering processing on a differential mode EMI signal of a non-measurement end. In addition, because filtering effect of the $\pi$-shaped filter circuit of the C-L-C structure is better than that of a filter circuit that includes only capacitors, on a premise that same filtering effect is achieved, the nominal capacitance value of the second capacitor Ci2, the nominal capacitance value of the third capacitor Ci3, and the inductance of the first differential mode inductor LDM1 may be small, so that a volume of the filter circuit 50 can be further reduced.

As shown in FIG. 9b, the second conversion capacitor Cc2 in the conversion circuit 40, the second inductor LCM1, and the seventh capacitor Ci7 form a $\pi$-shaped filter circuit of a C-L-C (capacitor-inductor-capacitor) structure, which may perform filtering processing on a differential mode EMI signal of a measurement end.

The converter 20 may generate electromagnetic interference during use, and may also be subject to electromagnetic interference from another device. An EMI signal usually includes a common mode EMI signal and a differential mode EMI signal. The second capacitor Ci2, the third capacitor Ci3, the first differential mode inductor LDM1, and the first conversion capacitor Cc1 in the conversion circuit 40 perform differential mode filtering on a signal that passes through the converter 20. The second conversion capacitor Cc2 in the conversion circuit 40, the second inductor LCM1, and the seventh capacitor Ci7 may also perform differential mode filtering on the signal that passes through the converter 20.

The first end of the first capacitor CY3 is connected to the EMI voltage division point N between the second capacitor Ci2 and the third capacitor Ci3, instead of being connected to the first input A21. In addition, a differential mode EMI voltage on the third capacitor Ci3 may return through the first capacitor CY3 and the second inductor LCM1, without passing through the seventh capacitor Ci7. Therefore, it is difficult to generate a differential mode EMI voltage at the measurement end. Thus, the nominal capacitance value of the first capacitor CY3 may not be limited by differential mode voltage coupling between the measurement end and the non-measurement end, that is, a disadvantage of the technology related to FIG. 7 is overcome. The nominal capacitance value of the first capacitor CY3 may be a large value. In addition, a larger nominal capacitance value of the first capacitor CY3 indicates a smaller parallel resonance frequency of the converter 20. For example, when $L_{CM}$=75 $\mu$H, and the nominal capacitance value of the first capacitor CY3 is 1 $\mu$F, an actual capacitance value for which a direct current voltage is considered is 0.35 $\mu$F, a parallel resonance frequency of the filter circuit 50 is 31.06 kHz, and the working frequency 65 kHz of the converter 20 is more than twice the parallel resonance frequency of the filter circuit 50. In this way, a case in which resonance occurs in the converter 20 can be reduced.

The second inductor LCM1 can prevent the common mode EMI signal of the non-measurement end from being conducted to the measurement end through the second conversion capacitor Cc2 in the conversion circuit 40. That is, the second inductor LCM1 can reduce coupling of the common mode EMI signal of the non-measurement end to the measurement end. Therefore, the second inductor LCM1 can perform filtering processing on the common mode EMI signal of the measurement end, that is filter the common mode EMI signal that passes through the second filter module 52.

In addition, low alternating current impedance of the first capacitor CY3 may also pull down an EMI voltage of the measurement end to be close to an EMI low potential 0 at the voltage division point N. Therefore, the filter circuit 50 may filter the differential mode EMI signal and the common mode EMI signal that pass through the converter 20, thereby implementing filtering effect of the filter circuit 50.

Because the nominal capacitance value of the first capacitor CY3 is large, when a same common mode suppression capability is achieved by using the related technology shown in FIG. 7, the inductance of the second inductor LCM1 in this embodiment may be reduced, for example, may be reduced to less than 100 $\mu$H. In this way, a volume of the second inductor LCM1 can be reduced, thereby reducing a volume of the converter 20.

As shown in FIG. 9b, in this embodiment, a solution in which a direct current voltage between the first input A21 and the second input B21 is divided, and the first capacitor CY3 is bridged between the EMI voltage division point N and the first end of the second inductor LCM1 is used. Voltage division is decoupled from bridging. In addition, voltage division solution greatly eliminates impact of a direct current voltage on imbalance of actual capacitance values. In the related technology shown in FIG. 7, an actual capacitance value of a filter capacitor CY2 changes as a direct current voltage difference between the node A1 and the node E1 changes, and a common mode suppression capability changes as the actual capacitance value of the filter capacitor CY2 changes. However, in this embodiment, due to a direct current voltage division function of the first resistor Ri1 and the second resistor Ri2, direct current voltages of the second capacitor Ci2 and the third capacitor Ci3 change simultaneously, to ensure that the actual capacitance values meet Ci2≈Ci3.

Because manufacturing tolerances exist on the first resistor Ri1, the second resistor Ri2, the second capacitor Ci2, and the third capacitor Ci3, when the tolerance is 10% relative to a nominal value, if the second capacitor Ci2 and the third capacitor Ci3 use a single capacitor, in a worst case, a voltage division ratio of the second capacitor Ci2 and the third capacitor Ci3 is 1.1:0.9. Both the second capacitor Ci2 and the third capacitor Ci3 include a plurality of single capacitors that are connected in series, in parallel, or in series and in parallel, a relative tolerance after the series-parallel connection is regressed to $\sqrt{N}$ times of an average value, where N is a quantity of single capacitors that are connected in parallel. An example in which three capacitors are connected in parallel and a relative tolerance of a single capacitor is 10% is used as an example. In the worst case, the voltage division ratio of the second capacitor Ci2 and the third capacitor Ci3 is 1.0577:0.9423, and approaches 1:1.

A ratio of a common mode EMI voltage $U_{CM}$ of the measurement end LISN to a differential mode EMI voltage $U_{DM}$ of the non-measurement end LISN, that is, a common mode suppression ratio, may be calculated according to the following formula:

$$\frac{U_{CM}}{U_{DM}} \approx \frac{C_{i3}-C_{i2}}{C_{i3}+C_{i2}} \times \frac{Z_{LISN(CM)}}{(j\omega C_Y)^{-1}+2Z_{LISN(CM)}} \approx \frac{1}{2} \times \frac{C_{i3}-C_{i2}}{C_{i3}+C_{i2}}$$

In a part with a first approximately equals sign in the foregoing formula, $C_{i2}$ represents an actual capacitance value existing when the second capacitor Ci2 bears a direct current voltage. $C_{i3}$ represents an actual capacitance value existing when the third capacitor Ci3 bears a direct current voltage. $Z_{LISN(CM)}$ represents common mode impedance of LISN, and is 75 $\Omega$ in this embodiment. f represents a frequency of an EMI voltage of the converter 20. $\omega=2\pi f$ represents an angular frequency of the EMI voltage of the converter 20. j represents an imaginary unit. The nominal capacitance value of the first capacitor CY3 is 1 $\mu$F. The actual capacitance value for which a direct current voltage is considered is about 0.35 $\mu$F (a fluctuation range of a direct current voltage difference between the first input A21 and the second input B21 is excessively small, and therefore, a direct current voltage of the first capacitor CY3, that is, a direct current voltage between the voltage division node N and the fourth output F31, slightly fluctuates, and the actual capacitance value of CY3 is fixed). At the frequency of f=240 kHz, capacitive reactance of the first capacitor CY3 is 1.895 $\Omega$, which is far less than the common mode impedance 75 $\Omega$ of LISN. Therefore, the foregoing formula may be simplified to a part with a second approximately equals sign, that is, the common mode suppression ratio mainly depends on the actual capacitance values existing when the second capacitor Ci2 and the third capacitor Ci3 bear direct current voltages.

If the second capacitor Ci2 and the third capacitor Ci3 use a single capacitor, the common mode suppression ratio is 41.4 dB in an optimal case, and the common mode suppression ratio is 26.0 dB in a worst case. If both the second capacitor Ci2 and the third capacitor Ci3 include a plurality of capacitors that are connected in series, in parallel, or in series and in parallel, in a typical case, the common mode suppression ratio is 30.8 dB. It can be learned from comparison with the related technology shown in FIG. 7 that, in an optimal case, the solution in this embodiment is better than the related technology shown in FIG. 7 by 41.4-33.0=8.4 dB, and in a worst case, the solution in this embodiment is better than the related technology shown in FIG. 7 by 26.0-11.3=14.7 dB. It can be learned that the common mode suppression ratio of the filter circuit 50 does not change as a working condition changes, and common mode suppression effect is good, and EMC of the converter 20 does not exceed an EMC limit. Therefore, when a direct current voltage difference range between an input end and an output end is wide, the common mode suppression ratio can also be kept at a high level. In other words, when the filter circuit 50 in this application is used in a converter 20 with a wide direct current voltage difference range between an input end and an output end, good filtering effect can also be mentioned.

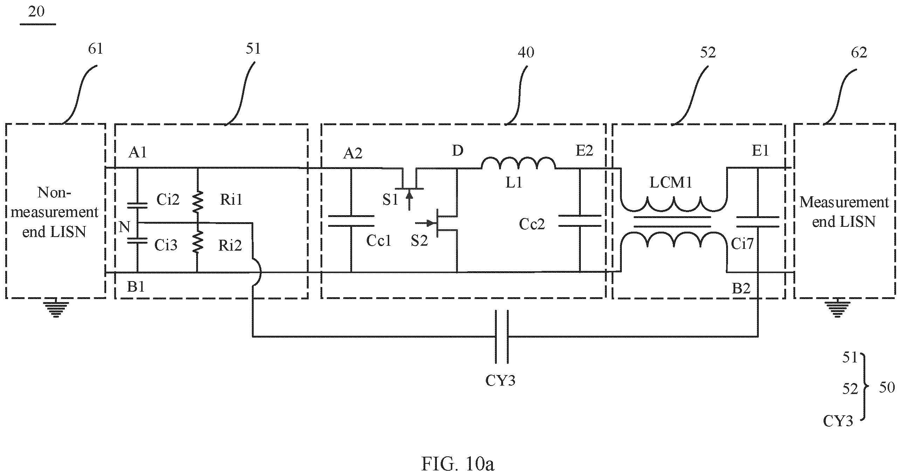

In another embodiment of this application, as shown in FIG. 10a, a difference from the embodiment shown in FIG. 9b lies in a structure of the first filter module 51. As shown in FIG. 10a, on a basis of the embodiment shown in FIG. 9b, the first differential mode inductor LDM1 is removed from the first filter module 51 in this embodiment. In this case, the first filter module may be implemented by using only capacitors, which helps improve integration.

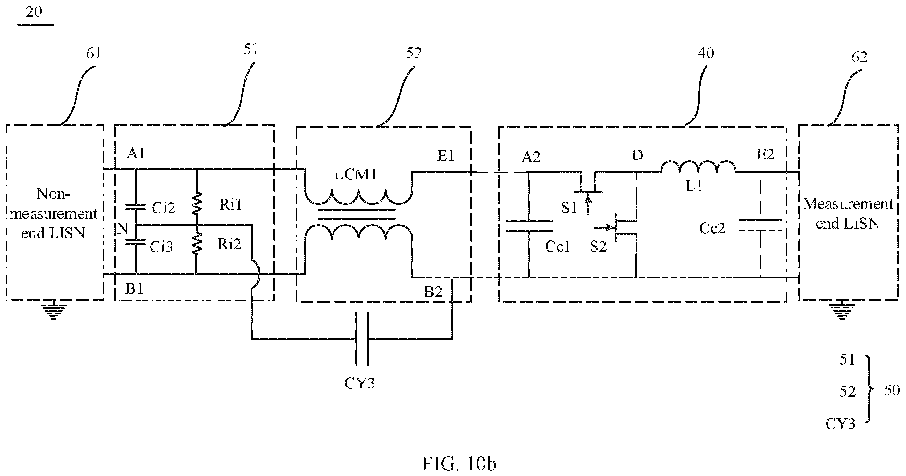

In another embodiment of this application, as shown in FIG. 10b, a difference from the embodiment shown in FIG. 10a lies in a structure of the second filter module 52 and a connection relationship among the first filter module 51, the second filter module 52, and the conversion circuit 40. As shown in FIG. 10b, on a basis of the second filter module 52 shown in FIG. 10a, the seventh capacitor Ci7 is removed from the second filter module 52 in this embodiment. In addition, in this embodiment, the first filter module 51 is connected to the second filter module 52, and the second filter module is further connected to the conversion circuit 40. That is, the second filter module 52 is connected between the first filter module 51 and the conversion circuit 40. The second inductor LCM1 is connected between the first filter module 51 and a connection node that is of the first capacitor CY3 and that is in the second filter module 52.

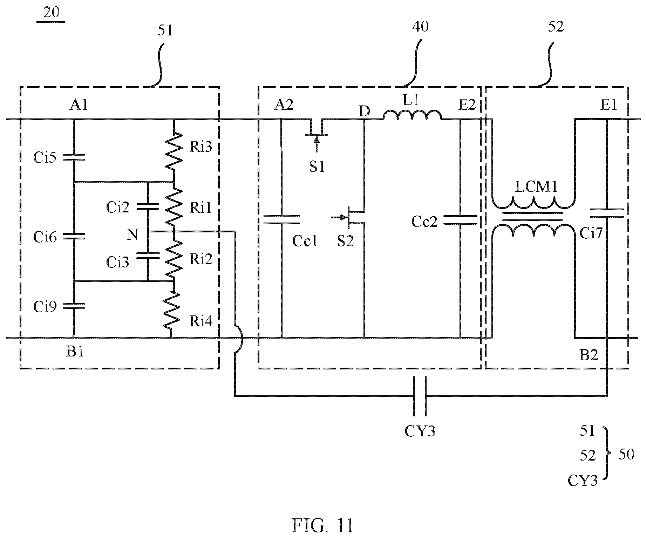

In another embodiment of this application, as shown in FIG. 11, a difference from the embodiment shown in FIG. 9b lies in a structure of the first filter module 51. As shown in FIG. 11, on a basis of the embodiment shown in FIG. 9b, a fifth capacitor Ci5, a sixth capacitor Ci6, a ninth capacitor Ci9, a third resistor Ri3, and a fourth resistor Ri4 are added to the first filter module 51 in this embodiment. The fifth capacitor Ci5, the sixth capacitor Ci6, and the ninth capacitor Ci9 are sequentially connected in series. The third resistor Ri3, the first resistor Ri1, the second resistor Ri2, and the fourth resistor Ri4 are sequentially connected in series. The third resistor Ri3 is connected in parallel to the fifth capacitor Ci5. The fourth resistor Ri4 is connected in parallel to the ninth capacitor Ci9. A series circuit that includes the second capacitor Ci2 and the third capacitor Ci3 is connected in parallel to the sixth capacitor Ci6. For example, a first end of the fifth capacitor Ci5 is connected to the node A1, a second end of the fifth capacitor Ci5 is connected to a first end of the sixth capacitor Ci6, and a second end of the sixth capacitor Ci6 is connected to a first end of the ninth capacitor Ci9. The first end of the second capacitor Ci2 is connected to the first end of the sixth capacitor Ci6, and the second end of the third capacitor Ci3 is connected to the second end of the sixth capacitor Ci6. A first end of the third resistor Ri3 is connected to the first end of the fifth capacitor Ci5. A second end of the third resistor Ri3, a first end of the first resistor Ri1, and the first end of the fifth capacitor Ci5 are all connected. The second end of the second resistor Ri2, the second end of the sixth capacitor Ci6, and a first end of the ninth capacitor Ci9 are all connected. A first end of the fourth resistor Ri4 is connected to the first end of the ninth capacitor Ci9. A second end of the fourth resistor Ri4 and a second end of the ninth capacitor Ci9 are connected to the node B1. Because a single capacitor can bear a limited direct current withstand voltage, a larger quantity of capacitors that are connected in series between the node A1 and the node B1 indicates a larger direct current that can be borne.

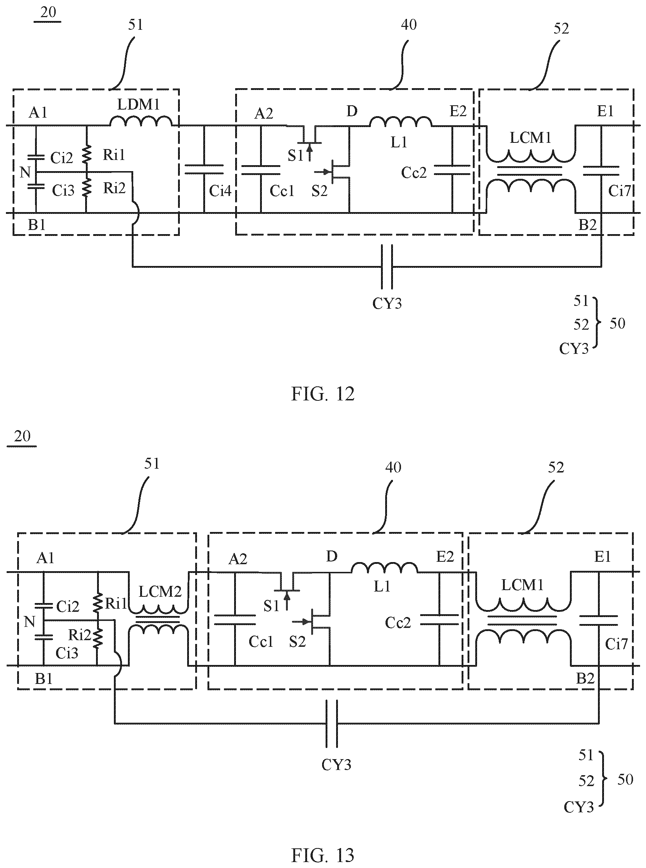

In another embodiment of this application, a difference from the embodiment shown in FIG. 9b lies in a structure of the first filter module 51. As shown in FIG. 12, on a basis of FIG. 9b, a fourth capacitor Ci4 is added to the first filter module 51 in this embodiment. As shown in FIG. 12, the fourth capacitor Ci4 is connected in parallel to a series circuit that includes the second capacitor Ci2 and the third capacitor Ci3. For example, a first end of the fourth capacitor Ci4 is connected to a second end of the first differential mode inductor LDM1, and a second end of the fourth capacitor Ci4 is connected to the second end of the third capacitor Ci3. Because an equivalent nominal capacitance value of a circuit that includes two capacitors connected in parallel is a sum of nominal capacitance values of the two capacitors, the fourth capacitor Ci4 is connected in parallel to the series circuit that includes the second capacitor Ci2 and the third capacitor Ci3, so that nominal capacitance values of equivalent capacitors in the first filter module 51 can be increased, and differential mode filtering effect can be further improved.

In another embodiment of this application, a difference from the embodiment shown in FIG. 9b lies in a structure of the first filter module 51. As shown in FIG. 13, in this embodiment, a first inductor LCM2 is used to replace the first differential mode inductor LDM1 shown in FIG. 9b. The first inductor LCM2 may be one common mode inductor or two differential mode inductors. A first end of the first inductor LCM2 is connected to the first end of the second capacitor Ci2. A second end of the first inductor LCM2 is connected to the second end of the third capacitor Ci3. A third end and a fourth end of the first inductor LCM2 are respectively connected to two ends of the first conversion capacitor Cc1. In this way, the second capacitor Ci2, the third capacitor Ci3, the first inductor LCM2, and the first conversion capacitor Cc1 in the conversion circuit 40 form a π-shaped filter circuit of a C-L-C (capacitor-inductor-capacitor) structure, which may perform filtering processing on a differential mode EMI signal of the non-measurement end. In addition, one common mode inductor or two differential mode inductors may perform filtering processing on a common mode EMI signal of the non-measurement end. Because the second inductor LCM1 in the second filter module 52 may also perform filtering processing on a common mode EMI signal of the measurement end, effect of filtering the common mode EMI signal can be improved.

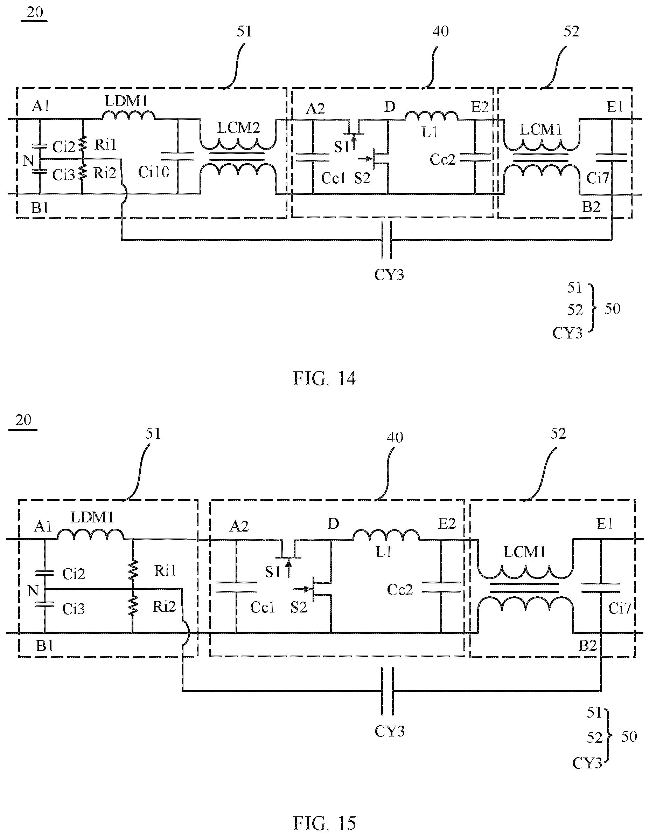

In another embodiment of this application, a difference from the embodiment shown in FIG. 9b lies in a structure of the first filter module 51. As shown in FIG. 14, on a basis of the embodiment shown in FIG. 9b, the first inductor LCM2 and a tenth capacitor Ci10 are added in this embodiment. A first end of a first differential mode inductor LDM1 is connected to the first end of the second capacitor Ci2. A second end of the first differential mode inductor LDM1 is connected to a first end of the tenth capacitor Ci10 and a first end of the first inductor LCM2. A second end of the first inductor LCM2 is connected to a second end of the tenth capacitor Ci10 and the second end of the third capacitor Ci3. A third end and a fourth end of the first inductor LCM2 are respectively connected to two ends of the first conversion capacitor Cc1 in the conversion circuit 40.

In another embodiment, positions between the first differential mode inductor LDM1 and the first inductor LDM2 may also be changed. That is, the first inductor LCM2 is connected between the tenth capacitor Ci10 and a series circuit that includes the first resistor Ri1 and the second resistor Ri2, and the first differential mode inductor LDM1 is connected between the tenth capacitor Ci10 and the conversion circuit 40.

In another embodiment of this application, a difference from the embodiment shown in FIG. 9b lies in a connection position of the first differential mode inductor LDM1. In this embodiment, as shown in FIG. 15, a first end of the first differential mode inductor LDM1 is connected to the first end of the second capacitor Ci2. A second end of the first differential mode inductor LDM1 is connected to the first end of the first resistor Ri1.

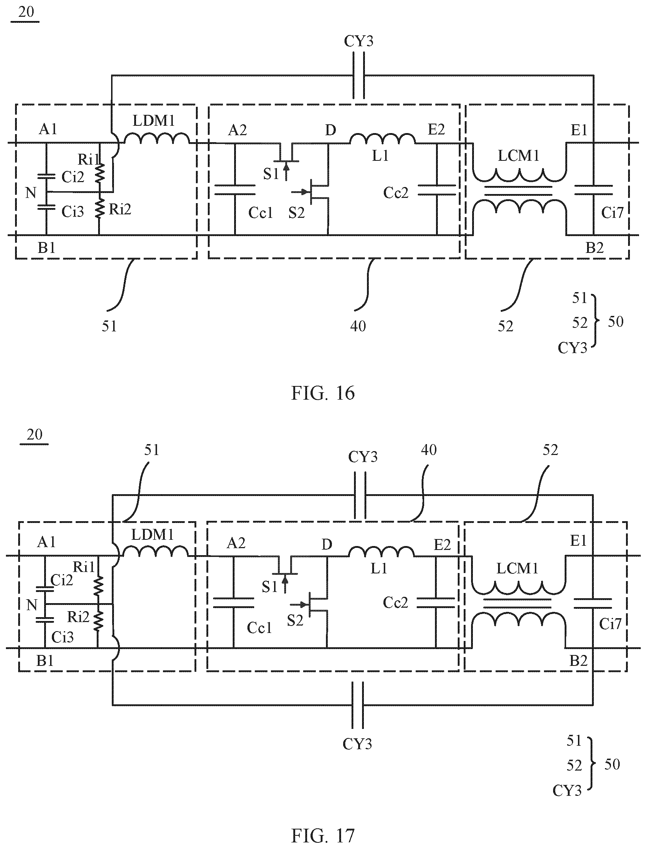

In another embodiment of this application, a difference from the embodiment shown in FIG. 9b lies in a connection position of the first capacitor CY3 in the second filter module 52. In the embodiment shown in FIG. 9b, the second end of the first capacitor CY3 and the first end of the second inductor LCM1 are connected to the node B2. As shown in FIG. 16, in this embodiment, the second end of the first capacitor CY3 and the second end of the second inductor LCM1 are connected to the node E1.

In another embodiment of this application, a difference from the embodiment shown in FIG. 9b lies in a quantity of and connection positions of first capacitors CY3. In the embodiment shown in FIG. 9b, there is one first capacitor CY3. The first end of the first capacitor CY3 is connected to the EMI voltage division point N between the second capacitor Ci2 and the third capacitor Ci3, and the second end of the first capacitor CY3 is connected to the node B2. As shown in FIG. 17, in this embodiment, there are two first capacitors CY3, and a connection position of one first capacitor CY3 in the first filter module 51 and that in the second filter module 52 are the same as those shown in FIG. 9b. A first end of the other first capacitor CY3 is connected to the EMI voltage division point N between the second capacitor Ci2 and the third capacitor Ci3, and a second end of the first capacitor CY3 is connected to the second end of the second inductor LCM1 and is connected to the node E1.

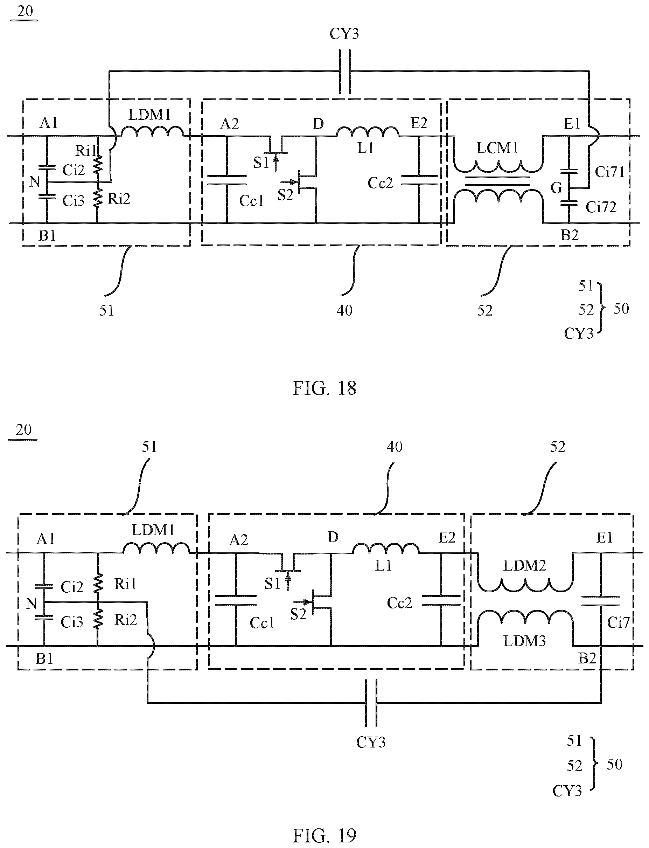

In another embodiment of this application, a difference from the embodiment shown in FIG. 9b lies in a structure of the seventh capacitor Ci7 and a connection position of the second end of the first capacitor CY3 in the second filter module 52. As shown in FIG. 18, in this embodiment, the seventh capacitor Ci7 includes a first sub-capacitor Ci71 and a second sub-capacitor Ci72. The first sub-capacitor Ci71 and the second sub-capacitor Ci72 are connected in series. A first end of the first sub-capacitor Ci71 is connected to the node E1, a second end of the first sub-capacitor Ci71 is connected to a first end of the second sub-capacitor Ci72, and a second end of the second sub-capacitor Ci72 is connected to the node B2. The second end of the first capacitor CY3 is connected to a connection node G between the first sub-capacitor Ci71 and the second sub-capacitor Ci72.

In another embodiment of this application, a difference from the embodiment shown in FIG. 9b lies in a structure of the second inductor LCM1. As shown in FIG. 9b, the second inductor LCM1 is a common mode inductor. In this embodiment, as shown in FIG. 19, the second inductor LCM1 includes two differential mode inductors LDM2 and LDM3. A first end of the differential mode inductor LDM2 is connected to the node E2, and a second end of the differential mode inductor LDM2 and the first end of the seventh capacitor Ci7 are connected to the node E1. A first end of the differential mode inductor LDM3 is connected to the second conversion capacitor Cc2 in the conversion circuit, and a second end of the differential mode inductor LDM3 is connected to the second end of the seventh capacitor Ci7.

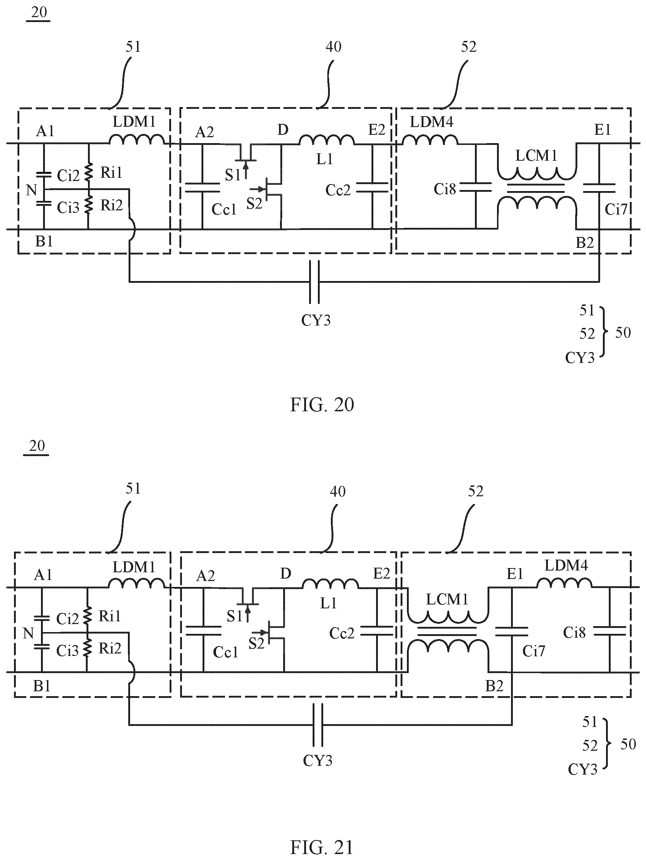

In another embodiment of this application, a difference from the embodiment shown in FIG. 9b lies in a structure of the second filter module 52. As shown in FIG. 20, on a basis of FIG. 9b, a second differential mode inductor LDM4 and an eighth capacitor Ci8 are added to the second filter module 52 in this embodiment. A first end of the second differential mode inductor LDM4 and a first end of the second conversion capacitor Cc2 are connected to the node E2. A second end of the second differential mode inductor LDM4, the third end of the second inductor LCM1, and a first end of the eighth capacitor Ci8 are all connected. A second end of the eighth capacitor Ci8, the fourth end of the second inductor LCM1, and a second end of the second conversion capacitor Cc2 are all connected. The first filter module 51 may perform filtering processing on the differential mode EMI signal. The second conversion capacitor Cc2, the second differential mode inductor LDM4, and the eighth capacitor Ci8 in the second filter module 52 may further perform filtering processing on the differential mode EMI signal. The second inductor LCM1 in the second filter module 52 may further perform filtering processing on the common mode EMI signal. In this way, filtering effect can be further improved.

In another embodiment of this application, a difference from the embodiment shown in FIG. 20 lies in positions of the second inductor LCM1, the seventh capacitor Ci7, the second differential mode inductor LDM4, and the eighth capacitor Ci8. In this embodiment shown in FIG. 20, the second differential mode inductor LDM4 is connected between the conversion circuit 40 and the second inductor LCM1. As shown in FIG. 21, in this embodiment, the second inductor LCM1 is connected between the conversion circuit 40 and the second differential mode inductor LDM4. Specifically, the third end of the second inductor LCM1 and a first end of the second conversion capacitor Cc2 are connected to the node E2. The fourth end of the second inductor LCM1 is connected to a second end of the second conversion capacitor Cc2. The second end of the second inductor LCM1, the first end of the seventh capacitor Ci7, and a first end of the second differential mode inductor LDM4 are all connected. The first end of the second inductor LCM1 is connected to both of the second end of the seventh capacitor Ci7 and the second end of the eighth capacitor Ci8. A second end of the second differential mode inductor LDM4 is connected to a first end of the eighth capacitor Ci8. The first filter module 51 may perform filtering processing on the differential mode EMI signal. The second conversion capacitor Cc2, the second differential mode inductor LDM4, and the eighth capacitor Ci8 in the second filter module 52 may further perform filtering processing on the differential mode EMI signal. The second inductor LCM1 in the second filter module 52 may further perform filtering processing on the common mode EMI signal. In this way, filtering effect can be further improved.

The foregoing describes embodiments of this application with reference to the accompanying drawings. However, this application is not limited to the foregoing specific implementations. The foregoing specific implementations are merely examples instead of limitations. Inspired by this application, a person of ordinary skill in the art may further make modifications without departing from the purposes of this application and the protection scope of the claims, and all the modifications shall fall within the protection of this application.

## Claims

1. A filter circuit, comprising a first filter module, a second filter module, and a first capacitor, wherein

   the first filter module comprises a second capacitor and a third capacitor that are connected in series, and a first end of the first capacitor is connected between the second capacitor and the third capacitor;
   a second end of the first capacitor is connected to the second filter module; and
   the first filter module comprises a first inductor, and/or the second filter module comprises a second inductor, one end of the first inductor is connected to the second capacitor, the first inductor is configured to perform common mode suppression on a signal that passes through the first filter module, and the second inductor is configured to perform common mode suppression on a signal that passes through the second filter module.

2. The filter circuit according to claim 1, wherein the first filter module further comprises a first resistor and a second resistor that are connected in series, the first resistor is connected in parallel to the second capacitor, and the second resistor is connected in parallel to the third capacitor.

3. The filter circuit according to claim 2, wherein a resistance value of the first resistor is the same as a resistance value of the second resistor.

4. The filter circuit according to any one of claims 1 to 3, wherein a second end of the second capacitor is connected to a first end of the third capacitor; and
   the first filter module further comprises a fourth capacitor, wherein a first end of the fourth capacitor is connected to a first end of the second capacitor, and a second end of the fourth capacitor is connected to a second end of the third capacitor.

5. The filter circuit according to claim 2 or 3, wherein the first filter module further comprises a third resistor, a fifth capacitor, and a sixth capacitor, and the third resistor is connected in parallel to the sixth capacitor; and
   a second end of the fifth capacitor is connected to a first end of the sixth capacitor, a first end of the fifth capacitor is connected to a first end of the second capacitor, the second end of the fifth capacitor is further connected to a second end of the third capacitor, and the third resistor is connected in series to the second resistor.

6. The filter circuit according to any one of claim 2, 3, or 5, wherein a first end of the first resistor is connected to the first end of the second capacitor, a second end of the first resistor is connected to a first end of the second resistor, and the first filter module further comprises a first differential mode inductor, wherein

   a first end of the first differential mode inductor is connected to the first end of the second capacitor, the first end of the first differential mode inductor is further connected to the first end of the first resistor, and a second end of the first differential mode inductor is used as an output end of the first filter module; or
   a first end of the first differential mode inductor is connected to the first end of the second capacitor, and a second end of the first differential mode inductor is connected to the first end of the first resistor.

7. The filter circuit according to any one of claim 2, 3, 5, or 6, wherein the first inductor comprises one common mode inductor or two differential mode inductors;

a first end of the first inductor is connected to the first end of the second capacitor, and the first end of the first inductor is further connected to the first end of the first resistor;

a second end of the first inductor is connected to the second end of the third capacitor, and the second end of the first inductor is further connected to a second end of the second resistor; and

a third end and a fourth end of the first inductor are used as output ends of the first filter module.

8. The filter circuit according to any one of claims 1 to 7, wherein the second inductor comprises one common mode inductor or two differential mode inductors;

there is one first capacitor, and a second end of the first capacitor is connected to a first end or a second end of the second inductor; or

there are a plurality of first capacitors, a second end of at least one first capacitor is connected to a first end of the second inductor, and the at least one first capacitor is connected to a second end of the second inductor; and

the first end and the second end of the second inductor are two ends of different coils in the second inductor, and a third end and a fourth end of the second inductor are used as input ends of the second filter module.

9. The filter circuit according to any one of claims 1 to 7, wherein the second filter module further comprises a seventh capacitor, a first end of the seventh capacitor is connected to a first end of the second inductor, and a second end of the seventh capacitor is connected to a second end of the second inductor.

10. The filter circuit according to claim 9, wherein the seventh capacitor comprises a first sub-capacitor and a second sub-capacitor that are connected in series, and the second end of the first capacitor is connected between the first sub-capacitor and the second sub-capacitor.

11. The filter circuit according to claim 9 or 10, wherein the second filter module further comprises a second differential mode inductor and an eighth capacitor, wherein

a second end of the second differential mode inductor, the third end of the second inductor, and a first end of the eighth capacitor are all connected, and a second end of the eighth capacitor is connected to the fourth end of the second inductor; or

a first end of the second differential mode inductor, the first end of the seventh capacitor, and the second end of the second inductor are connected, a second end of the second differential mode inductor is connected to a first end of the eighth capacitor, and a second end of the eighth capacitor is connected to the second end of the seventh capacitor, wherein

the first end and the third end of the second inductor are two ends of a same coil in the second inductor, and the second end and the fourth end of the second inductor are two ends of a same coil in the second inductor.

12. A converter, comprising a conversion circuit and the filter circuit according to any one of claims 1 to 11, wherein the first filter module and the second filter module in the filter circuit are respectively electrically connected to the conversion circuit.

13. The converter according to claim 12, wherein the conversion circuit is connected between the first filter module and the second filter module, and the second inductor is connected between the conversion circuit and a connection node that is of the first capacitor and that is in the second filter module; or

the second filter module is connected between the first filter module and the conversion circuit, and the second inductor is connected between the first filter module and a connection node that is of the first capacitor and that is in the second filter module.

14. The converter according to claim 12 or 13, wherein the conversion circuit comprises a first conversion capacitor, and the first filter circuit further comprises the first differential mode inductor; and

the first end of the second capacitor is connected to the first end of the first differential mode inductor, the second end of the first differential mode inductor is connected to a first end of the first conversion capacitor, and the second end of the third capacitor is connected to a second end of the first conversion capacitor.

15. The converter according to any one of claims 12 to 14, wherein the conversion circuit further comprises a second conversion capacitor, and the second filter module further comprises the second differential mode inductor, wherein

the first end of the second differential mode inductor is connected to a first end of the second conversion capacitor, and the fourth end of the second inductor is connected to the first end of the second conversion capacitor; or the third end and the fourth end of the second inductor are respectively connected to two ends of the second conversion capacitor.

16. A power supply system, comprising a direct current power supply and the converter according to any one of claims 12 to 15, wherein the direct current power supply is electrically connected to the converter.

FIG. 1

FIG. 2

FIG. 3

FIG. 4

FIG. 5

FIG. 6

FIG. 7

FIG. 8

FIG. 9a

FIG. 9b

FIG. 10a

FIG. 10b

EP 4 611 208 A1

FIG. 11

FIG. 12

FIG. 13

FIG. 14

FIG. 15

20

FIG. 16

FIG. 17

20

CY3

A1    LDM1      A2     D    L1    E2      E1

Ri1       S1          LCM1     Ci71

Ci2             Cc2         G

N          Cc1   S2                 Ci72

Ci3   Ri2

B1                                    B2

51                        40                   52

$\left.\begin{array}{l}51\\52\\CY3\end{array}\right\}$ 50

FIG. 18

20

51                       40                      52

A1    LDM1      A2     D    L1    E2      E1

Ci2   Ri1       S1          LDM2

N                      Cc2

Ci3   Ri2    Cc1   S2                 Ci7

B1                           LDM3     B2

CY3

$\left.\begin{array}{l}51\\52\\CY3\end{array}\right\}$ 50

FIG. 19

FIG. 20

FIG. 21

## INTERNATIONAL SEARCH REPORT

| International application No. |
|---|
| **PCT/CN2023/104126** |

| A. | CLASSIFICATION OF SUBJECT MATTER |
|---|---|

H02J3/38(2006.01)i;  H02J3/01(2006.01)i;  H02M3/158(2006.01)i;  H02M1/44(2007.01)i;  H02M1/12(2006.01)i

According to International Patent Classification (IPC) or to both national classification and IPC

| B. | FIELDS SEARCHED |
|---|---|

Minimum documentation searched (classification system followed by classification symbols)

IPC：H02J H02M

Documentation searched other than minimum documentation to the extent that such documents are included in the fields searched

Electronic data base consulted during the international search (name of data base and, where practicable, search terms used)

CNTXT; CNABS; DWPI; EPTXT; USTXT; WOTXT; CNKI: 滤波, 电磁干扰, 共模, 差模, 电容, 串联, 电感, filter, EMI, Electromagnetic Interference, Common mode, Differential mode, Capacitance, Inductance

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 204652213 U (SHANGHAI KAIYIN POWER TRANSMISSION SYSTEM CO., LTD.) 16 September 2015 (2015-09-16) description, paragraphs [0017]-[0020], and figure 3 | 1-4, 9, 12-16 |
| A | CN 114844344 A (NORTHWESTERN POLYTECHNIC UNIVERSITY) 02 August 2022 (2022-08-02) entire document | 1-16 |
| A | CN 108566081 A (BEIJING ELECTRIC VEHICLE CO., LTD.) 21 September 2018 (2018-09-21) entire document | 1-16 |
| A | CN 209088805 U (XJ POWER CO., LTD.) 09 July 2019 (2019-07-09) entire document | 1-16 |
| A | US 2015021994 A1 (BOEING COMPANY) 22 January 2015 (2015-01-22) entire document | 1-16 |
| A | CN 204652213 U (SHANGHAI KAIYIN POWER TRANSMISSION SYSTEM CO., LTD.) 16 September 2015 (2015-09-16) entire document | 5-8, 10, 11 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **24 August 2023** | **17 September 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/104126**

| Patent document cited in search report | | | Publication date (day/month/year) | Patent family member(s) | | | Publication date (day/month/year) |
|---|---|---|---|---|---|---|---|
| CN | 204652213 | U | 16 September 2015 | None | | | |
| CN | 114844344 | A | 02 August 2022 | None | | | |
| CN | 108566081 | A | 21 September 2018 | CN | 108566081 | B | 06 March 2020 |
| CN | 209088805 | U | 09 July 2019 | None | | | |
| US | 2015021994 | A1 | 22 January 2015 | EP | 2827481 | A2 | 21 January 2015 |
| | | | | EP | 2827481 | A3 | 13 May 2015 |
| | | | | EP | 2827481 | B1 | 12 February 2020 |
| | | | | US | 2017072882 | A1 | 16 March 2017 |
| | | | | US | 10476379 | B2 | 12 November 2019 |
| | | | | JP | 2015053848 | A | 19 March 2015 |
| | | | | JP | 6444079 | B2 | 26 December 2018 |
| | | | | US | 2015021983 | A1 | 22 January 2015 |
| | | | | US | 9533638 | B2 | 03 January 2017 |
| | | | | US | 9768680 | B2 | 19 September 2017 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211476312